(19) Europäisches Patentamt
European Patent Office
Office européen des brevets

(11) **EP 1 725 834 B1**

(12) **EUROPÄISCHE PATENTSCHRIFT**

(45) Veröffentlichungstag und Bekanntmachung des Hinweises auf die Patenterteilung:
**25.07.2007   Patentblatt 2007/30**

(21) Anmeldenummer: **05716223.2**

(22) Anmeldetag: **18.03.2005**

(51) Int Cl.:
**G01B 11/275** (2006.01)

(86) Internationale Anmeldenummer:
**PCT/EP2005/002940**

(87) Internationale Veröffentlichungsnummer:
**WO 2005/090906 (29.09.2005 Gazette 2005/39)**

(54) **MESSVERFAHREN UND MESSGERÄT ZUR BESTIMMUNG DER RÄUMLICHEN LAGE EINER RADFELGE SOWIE FAHRWERKVERMESSUNGSEINRICHTUNG**

MEASURING METHOD AND MEASURING UNIT FOR DETERMINING THE SPATIAL POSITION OF A WHEEL RIM, AND CHASSIS MEASURING DEVICE

PROCEDE ET DISPOSITIF DE MESURE POUR DETERMINER LA POSITION SPATIALE D'UNE JANTE DE ROUE ET DISPOSITIF DE MESURE DU CHASSIS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **18.03.2004   DE 102004013441**

(43) Veröffentlichungstag der Anmeldung:
**29.11.2006   Patentblatt 2006/48**

(73) Patentinhaber: **Beissbarth GmbH**
**80993 München (DE)**

(72) Erfinder:
• **DONNER, Karin**
**94121 Salzweg (DE)**
• **BUX, Hermann**
**86559 Adelzhausen (DE)**
• **SCHOMMER, Stefan**
**85716 Unterschleissheim (DE)**
• **ENGL, Rudolf**
**84539 Ampfing (DE)**

(74) Vertreter: **Klunker . Schmitt-Nilson . Hirsch**
**Winzererstrasse 106**
**80797 München (DE)**

(56) Entgegenhaltungen:
**EP-A- 0 895 056        EP-A- 1 184 640**
**WO-A-01/77617        US-B1- 6 323 776**

## EP 1 725 834 B1

**Beschreibung**

Die Erfindung betrifft ein Meßverfahren und Meßgerät zur Bestimmung der räumlichen Lage einer Radfelge zu einem Meßgerät, das wenigstens eine Kamera aufweist, wobei die Radfelge im Blickfeld der Kamera liegt, sowie ein Fahrwerkvermessungsverfahren und eine Fahrwerkvermessungseinrichtung, bei der derartige Meßgeräte eingesetzt werden.

Aus DE 100 43 354.5 ist eine Fahrwerkvermessungseinrichtung mit Meßköpfen zur Bestimmung der Radstellungen der Räder eines Kraftfahrzeuges auf einem Meßplatz, wobei jeder Meßkopf wenigstens eine Kamera aufweist, die auf ein im Blickfeld der Kamera angeordnetes, in einer festen Beziehung zu dem Rad des Kraftfahrzeuges positioniertes Meßtarget ausgerichtet ist, und wobei die Bilder der Kamera von einer Auswertungseinheit ausgewertet werden, um die räumliche Lage des Meßtargets und damit des Rades bezüglich der Position der Kamera beziehungsweise des Meßkopfes zu bestimmen. Die Einrichtung hat ein optisches, in den Meßköpfen integriertes Referenzsystem zur Kalibrierung der Meßköpfe der Fahrwerkvermessungseinrichtung bezüglich der Position der Meßköpfe zueinander.

Fahrwerkvermessungseinrichtungen mit Meßgeräten, die zwei Kameras aufweisen, die unter unterschiedlichen Winkeln auf Targets an den Rädern gerichtet sind, sind auch aus den DE 197 57 760, DE 197 57 763, DE 100 32 356 und DE 100 50 653 bekannt.

Bei diesen sogenannten berührungslosen Fahrwerkvermessungseinrichtungen müssen Meßtargets verwendet werden, da die räumliche Lage aus den Merkmalen des Rades oder der Radfelge selbst durch die direkte Bildauswertung der Bilder des Rades oder der Felge nicht hinreichend genau bestimmt werden kann.

Bei der DE 29 48 573 wird versucht, die räumliche Lage des Rades über eine Kreis- oder Ellipsenpassung an die Felgenhornkontur zu bewerkstelligen. Dies führt wegen der räumlichen Ausrundung des Felgenhorns zu systematischen Fehlern insbesondere beim Lenkradeinschlag. Diese Fehler rühren daher, dass irrtümlicherweise angenommen wird, die Felgenkontur sei das perspektivische Bild eines räumlichen Kreises, während in Wahrheit kein räumlicher Kreis perspektivisch beobachtet wird. Darüber hinaus sehen bei einem Zweikameraaufbau die beiden Kameras des Stereosystems nicht etwa die gleiche räumliche Kontur, sondern verschiedene Konturen.

EP-A-0 895 056 beschreibt ein Verfahren und eine Vorrichtung zum Bestimmen der räumlichen Lage einer Radfelge. Dabei wird die Radfelge mit mindestens einer Kamera abgebildet. Die durch die Kamera verursachte Bildverzerrung wird mittels eines neuronalen Netzes korrigiert. Anhand des entzerrten Bildes der Radfelge wird deren Lage im Raum berechnet.

Aus der US-B-6 323 776 ist bekannt, ein Modell für einen an der Radfelge montierten Zielkörper bereitzustellen und anhand dieses Zielkörpermodells eine Abbildungsentzerrung und die Positionsbestimmung der Radfelge im Raum durchzuführen.

Die Erfindung umfasst ein Verfahren zur Bestimmung der räumlichen Lage einer Radfelge zu einem Meßgerät, das wenigstens eine Kamera aufweist, wobei die Radfelge im Blickfeld der Kamera liegt, das Bereitstellen eines Modells, das einen Modellkörper eines lokalisierbaren Radfelgen-Geometriedetails sowie die räumliche Lage des Modellkörpers zu dem Meßgerät durch Modellparameter beschreibt, das Erfassen eines Bildes des Radfelgen-Geometriedetails der Radfelge mit der Kamera, das Anpassen oder Anfitten der aus den Modellparametern resultierenden Abbildung des Modellkörpers an das Bild des Radfelgen-Geometriedetails durch Verändern von Modellparametern des Modells, und das Verfolgen der Veränderungen der Modellparameter des Modells beim Anpassen, wobei die Daten bezüglich der Lage des Modellkörpers des Radfelgen-Geometriedetails die räumliche Lage des Radfelgen-Geometriedetails und damit der Radfelge selbst wiedergeben, wenn die aus den Modellparametern resultierende Abbildung des Modellkörpers des Radfelgen-Geometriedetails mit dem erfassten Bild des Radfelgen-Geometriedetails innerhalb vorgegebener Toleranzgrenzen übereinstimmt.

Durch dieses Verfahren werden den tatsächlichen Gegebenheiten bei der Fahrwerkvermessung, das heißt der tatsächlichen Radfelge, Rechnung getragen, um die durch das Felgenhorn aufgespannte Radebene genau zu bestimmen. Die oben erwähnten systematischen Fehler bei den herkömmlichen Verfahren können damit vermieden werden.

Eine weitere vorteilhafte Ausgestaltung des erfindungsgemäßen Verfahrens ist dadurch gekennzeichnet, dass der Modellkörper ein sogenannter Schmiegetorus oder eine 3D-CAD-Darstellung ist. Während der Schmiegetorus die einfachste Form eines 3D-Modells für die Felgenrandkontur darstellt, kann auch eine 3D-CAD-Darstellung der betreffenden Felge verwendet werden, wodurch sich ebenfalls gute Ergebnisse erzielen lassen.

Eine weitere vorteilhafte Ausgestaltung des erfindungsgemäßen Verfahrens ist dadurch gekennzeichnet, dass im Falle des Schmiegetorus Modellparameter des Modells ein Hauptradius $R$ und ein Nebenradius $r$ des Torus, eine Position $c$ des Toruszentrums, ein Normalenvektor $n$ der Rotationsebene des Torus und eine Position $z$ des Projektionszentrums einer Lochkamera sind, mit der der Schmiegetorus betrachtet wird. Von diesen Modellparametern des Schmiegetorus sind einige aus den tatsächlichen Abmessungen der Radfelge und aus der Anordnung der Lochkamera bekannt, so dass die Zahl der Unbekannten in dem resultierenden Optimierungsproblem in vorteilhafter Weise reduziert und das Anpassen der Abbildung des Schmiegetorus an das Bild der tatsächliche Felge erleichtert wird.

Eine weitere vorteilhafte Ausgestaltung des erfindungsgemäßen Verfahrens ist dadurch gekennzeichnet, dass das Radfelgen-Geometriedetail die Felgenrandkontur ist. Obwohl auch andere Radfelgen-Geometriedetails als Grundlage für die Bestimmung der räumlichen Lage einer Radfelge in Frage kommen, ist die Felgenrandkontur ein bevorzugtes Merkmal, weil dort ein hinreichend guter Kontrast zwischen der Radfelge und dem Reifen zu erwarten ist.

Eine weitere vorteilhafte Ausgestaltung des erfindungsgemäßen Verfahrens ist dadurch gekennzeichnet, dass die Radfelgenkontur mit zwei Kameras erfasst wird, die unter unterschiedlichen Winkeln auf das Rad gerichtet sind. Wie noch gezeigt wird, wäre prinzipiell eine Kamera ausreichend als Grundlage für die Durchführung der Messungen gemäß der Erfindung. Zwei Kameras sind jedoch vorteilhaft in Bezug auf eine Fehlerkorrektur, um einen höheren Genauigkeitsgrad der Messung zu erhalten.

Eine weitere vorteilhafte Ausgestaltung des erfindungsgemäßen Verfahrens ist dadurch gekennzeichnet, dass das Bild der Radfelge auch zur Bestimmung eines Drehwinkel-Bezugspunktes an der Felge, der als Winkelausganspunkt bei der Nachführung der Raddrehung dient, verwendet wird. Aus dem Drehwinkel und dem Normalenvektor der Felgenrandebene kann die wahre Drehachse genau bestimmt werden.

Eine weitere vorteilhafte Ausgestaltung des erfindungsgemäßen Verfahrens ist dadurch gekennzeichnet, dass zur Bestimmung des Drehwinkel-Bezugspunktes an der Felge die Lage eines charakteristischen Merkmals auf dem Rad verwendet wird, wobei in vorteilhafeter Weise als charakteristisches Merkmal zur Bestimmung des Drehwinkel-Bezugspunktes ein charakteristisches Merkmal der Felge oder ein Ventil des Rades verwendet wird. Da ein charakteristisches Merkmal eines Kraftfahrzeugrades, welches die Drehlage des Rades anzeigt, das Ventil ist, kann dieses ohne weitere Massnahmen am Rad als charakteristisches Merkmal verwendet werden. Es könnte auch ein Marker verwendet werden, um einen Drehwinkel-Bestimmungspunkt an der Felge zu markieren, wobei dazu wieder ein Kontakt mit dem Rad erforderlich wäre. In der Praxis hat sich gezeigt, dass die Lokalisierung des Ventils für die Zwecke der vorliegenden Messung ausreichend ist.

Eine weitere vorteilhafte Ausgestaltung des erfindungsgemäßen Verfahrens ist dadurch gekennzeichnet, dass zur Segmentierung des Felgenumfangs eine Vorsegmentierung und eine Feinsegmentierung (Subpixelsegmentierung) durchgeführt wird. Diese Vorgehensweise ermöglicht in vorteilhafter Weise eine Vereinfachung der erforderlichen Rechenoperationen, um die Segmentierung mit ausreichender Genauigkeit durchführen zu können.

Eine weitere vorteilhafte Ausgestaltung des erfindungsgemäßen Verfahrens ist dadurch gekennzeichnet, dass die Daten bezüglich der Modellparameter des Modells, die die räumliche Lage der Radfelge definieren, wenn die Abbildung des Modellkörpers des Radfelgen-Geometriedetails mit dem erfassten Bild des Radfelgen-Geometriedetails übereinstimmt, ausgegeben oder angezeigt werden.

Eine weitere vorteilhafte Ausgestaltung des erfindungsgemäßen Verfahrens ist gekennzeichnet durch folgende Schritte: Starten der Bildaufnahme, Segmentierung der Felge, wobei eine Segmentierung des Ventils des Kraftfahrzeugrades erfolgt, Segmentierung des Felgenrandes; um vorgegebene Winkelbereiche des Felgenrandes auszumessen, Rekonstruktion der 3D-Lage des Felgenrandes, Anzeigen des Ergebnisses der Berechnung, nämlich des Normalenvektors und des Zentrumspunkt der Felgenrandebene und/oder Speichern derselben für die weitere Verrechnung. Durch diese Ausgestaltung wird in vorteilhafter Weise eine Felgenschlagkompensation möglich.

Eine weitere vorteilhafte Ausgestaltung des erfindungsgemäßen Verfahrens ist dadurch gekennzeichnet, dass nach dem Starten der Bildaufnahme zunächst überprüft wird, ob die Beleuchtung für die Messung ausreichend ist, und dass die Beleuchtung entsprechend nachgestellt wird.

Eine weitere vorteilhafte Ausgestaltung des erfindungsgemäßen Verfahrens ist dadurch gekennzeichnet, dass die Nachstellung eine größere oder geringere Helligkeit des Lichtes für die Beleuchtung umfasst.

Das erfindungsgemäße Meßgerät zur Bestimmung der räumlichen Lage einer Radfelge zu dem Meßgerät, das wenigstens eine Kamera aufweist, wobei die Radfelge im Blickfeld der Kamera liegt, ist gekennzeichnet durch einen Rechner, der programmiert ist, um eines der vorstehend beschriebenen Verfahren durchzuführen.

Eine vorteilhafte Ausgestaltung des erfindungsgemäßen Meßgeräts ist dadurch gekennzeichnet, dass in dem vorstehenden Meßgerät zwei Kameras vorgesehen sind, die die Radfelgenkontur erfassen und unter unterschiedlichen Winkeln auf das Rad gerichtet sind.

Eine weitere vorteilhafte Ausgestaltung des erfindungsgemäßen Meßgeräts ist dadurch gekennzeichnet, dass es je Kamera einen optischen Sensor, eine Objektiv, eine Blendenstelleinrichtung und eine Fokusstelleinrichtung umfasst, und dass die Einbaulage des Sensors und des Objektivs, die Blendeneinstellung und Fokuseinstellung vorjustiert sind.

Eine weitere vorteilhafte Ausgestaltung des erfindungsgemäßen Meßgeräts ist dadurch gekennzeichnet, dass bei Zoom-Objektiven zudem die eingestellte Brennweite vorjustiert ist.

Eine weitere vorteilhafte Ausgestaltung des erfindungsgemäßen Meßgeräts ist dadurch gekennzeichnet, dass eine Ausgabe- beziehungsweise Anzeigevorrichtung zum Ausgegeben beziehungsweise Anzeigen der Daten bezüglich der Modellparameter des Modells, die die räumliche Lage der Radfelge definieren, wenn die Abbildung des Modellkörpers des Radfelgen-Geometriedetails mit dem erfassten Bild des Radfelgen-Geometriedetails übereinstimmt, vorgesehen ist. Dadurch wird das Aufstellen des Meßplatzes erleichtert, weil die Feinjustage des Bezugssystems jederzeit erneut durchgeführt werden kann.

Im wesentlichen entsprechen die Vorteile des erfindungsgemäßen Meßgeräts beziehungsweise seine Ausführungsbeispiele dem Vorteil des erfindungsgemäßen Verfahrens beziehungsweise seiner Ausführungsbeispiele, wie oben beschrieben wurde.

Das erfindungsgemäße Verfahren zur Fahrwerkvermessung an Kraftfahrzeugen, ist dadurch gekennzeichnet, dass eines der oben genannten Verfahren zur Bestimmung der räumlichen Lage einer Radfelge zu einem Meßgerät an den Rädern des Kraftfahrzeugs durchgeführt wird, dass die relativen Positionen der Meßgeräte zur Durchführung der Messungen bestimmt werden, dass die Meßergebnisse der Messungen an den Rädern des Kraftfahrzeugs unter Berücksichtigung der relativen Positionen der Meßgeräte in Radstellungswerte umgerechnet werden, und dass die Radstellungswerte ausgegeben oder angezeigt werden.

Eine vorteilhafte Ausgestaltung des erfindungsgemäßen Verfahrens ist dadurch gekennzeichnet, dass die relativen Positionen der Meßgeräte zur Durchführung der Messungen durch eine justierbare Montage der Meßgeräte an einem Meßplatz festgelegt werden.

Eine weitere vorteilhafte Ausgestaltung des erfindungsgemäßen Verfahrens ist dadurch gekennzeichnet, dass die relativen Positionen der Meßgeräte zur Durchführung der Messungen durch ein Bezugssystem bestimmt werden, das an den Meßgeräten angeordnet ist.

Eine weitere vorteilhafte Ausgestaltung des erfindungsgemäßen Verfahrens ist gekennzeichnet durch folgende Schritte: Durchführung der Messungen der einzelnen Meßgeräte; Einlesen der Meßergebnisse in einen Rechner; Berechnen der Transformationsmatrix aus den Ergebnissen der Bezugssystemessung ; Transformieren der Ergebnisvektoren der Meßgeräte in das Rechenkoordinatensystems über Versatzwinkel und Abstände aus dem Bezugsmeßsystem; Bestimmen der Radstellungswerte in dem Rechenkoordinatensystem durch Auswertung der Stellung der Ergebnisvektoren zueinander zur Berechnung der entsprechenden Fahrwerkmesswerte; Übergeben der Ergebnisse zu den Radstellungs-Winkelwerten an eine Anzeigeeinrichtung und/oder Speichern derselben zur weiteren Verwendung.

Die Vorteile des erfindungsgemäßen Verfahrens zur Fahrwerkvermessung an Kraftfahrzeugen und der vorteilhaften Ausgestaltungen liegen darin, dass die oben beschriebenen Meßgeräte und das entsprechende Verfahren in vorteilhafter Weise zur genauen Vermessung des gesamten Fahrwerks an Kraftfahrzeugen eingesetzt werden können.

Eine erfindungsgemäße Fahrwerkvermessungseinrichtung für Kraftfahrzeuge ist gekennzeichnet durch Meßgeräte zur Bestimmung der räumlichen Lage einer Radfelge zu einem Meßgerät an den Rädern des Kraftfahrzeugs, die auf einem Meßplatz derart positioniert sind, dass ein Meßgerät jeweils einem der Räder des Kraftfahrzeugs zugeordnet ist, wobei die relativen Positionen der Meßgeräte bei der Durchführung der Messungen bestimmt sind, einen Rechner, der die Meßergebnisse der Messungen an den Rädern des Kraftfahrzeugs unter Berücksichtigung der relativen Positionen der Meßgeräte in Radstellungswerte umrechnet, und durch eine Anzeige/Ausgabeeinrichtung, die die Radstellungswerte ausgibt oder anzeigt.

Eine vorteilhafte Ausgestaltung der erfindungsgemäßen Fahrwerkvermessungseinrichtung ist dadurch gekennzeichnet, dass die relativen Positionen der Meßgeräte zur Durchführung der Messungen durch eine justierbare Montage der Meßgeräte an einem Meßplatz festgelegt werden.

Eine vorteilhafte Ausgestaltung der erfindungsgemäßen Fahrwerkvermessungseinrichtung ist dadurch gekennzeichnet, dass die relativen Positionen der Meßgeräte zur Durchführung der Messungen durch ein Bezugssystem bestimmt werden, das an den Meßgeräten angeordnet ist.

Eine vorteilhafte Ausgestaltung der erfindungsgemäßen Fahrwerkvermessungseinrichtung ist dadurch gekennzeichnet, dass beim Zusammenbau zweier Kameras in einem Meßgerät zu einem Stereo-Meßsystem die Kameras bezogen auf das Koordinatensystem des Meßgeräts kalibriert sind.

Die Vorteile der erfindungsgemäßen Fahrwerkvermessungseinrichtung für Kraftfahrzeuge entsprechen denen, die im Zusammenhang mit dem Verfahren zur Fahrwerkvermessung an Kraftfahrzeugen beschrieben wurden.

Ausführungsbeispiele der Erfindung werden nun anhand der beiliegenden Zeichnungen beschrieben. Es zeigen:

Fig. 1 eine schematische Darstellung eines rotierenden Körpers mit Normalenvektor einer ausgezeichneten Ebene;
Fig. 2 eine schematische Darstellung, wie sich am Beispiel einer Kugel mit einer. Veränderung der Lichtquellen auch die Schattengrenzen verändern;
Fig. 3 eine schematische Darstellung einer Randkontur beziehungsweise der Schattengrenze einer Ringfläche;
Fig. 4 eine schematische Darstellung eines Querschnitts durch die Felgenhornzone eines Kfz-Rades mit eingezeichneter Lage des Querschnittskreises des Schmiegetorus;
Fig. 5 schematische Darstellung eines Schnittbilds des Torus in der Schnittebene $E_\varphi$;
Fig. 6 eine schematische Darstellung der Fehlrekonstruktion durch klassisches Stereomatching bei einer ringförmigen Objektgeometrie im Schnittbild;
Fig. 7 eine schematische Darstellung von Torus, Radachse und Radmittelebene bei einem KfZ-Rad;
Fig. 8 eine schematische Darstellung des Torus zum Felgenhorn bei einem KfZ-Rad;

Fig. 9 eine schematische Darstellung einer Fahrwerkvermessungseinrichtung mit ortsfest angeordneten Meßgeräten;

Fig. 10 eine schematische Darstellung einer Fahrwerkvermessungseinrichtung mit ortsfest angeordneten Meßgeräten und Bezugssystem zur Justage der Meßgeräte untereinander;

Fig. 11 ein schematisches Gesamt-Ablaufdiagramm für die Fahrwerkvermessung eines Kraftfahrzeugs;

Fig. 12 ein detailliertes Gesamt-Ablaufdiagramm für die Fahrwerkvermessung eines Kraftfahrzeugs;

Fig. 13 eine Ablaufdiagramm für die Felgenschlagkompensation beziehungsweise die Bestimmung der wahren Rotationsachse des Rades; und

Fig. 14 eine Ablaufdiagramm für die Bestimmung des aktuellen Spur- und Sturzwinkels des Rades.

Bestimmung der räumlichen Lage eines rotierenden Körpers

Wenn zur Bestimmung der räumlichen Lage eines rotierenden insbesondere rotationssymmetrischen Körpers weder Targets noch Marken an dem Körper aufgebracht werden und der rotierende Körper nicht von vornherein gut verfolgbare ausgezeichnete Punkte hat, können lokalisierte Geometriedetails in der folgenden Art und Weise erfasst werden. Man ermittelt ausgezeichnete Geometriedetails (etwa Punkte, Kanten, Flächen) des rotierenden Körpers im Raum durch eine algorithmische Rekonstruktion aus vorzugsweise perspektivischen Bildern des Körpers. Man verfolgt diese ausgezeichneten Geometriedetails während der Drehung des Körpers. 3D-Punkte bewegen sich dann auf Kreisbahnen im Raum, Kanten und Flächennormalen beschreiben Rotationsflächen um die wahre Drehachse.

Hierzu wird zunächst ein vorzugsweise parametrisches 3D-Modell eingesetzt, das einen gut lokalisierbaren Teil der realen Geometrie der rotierenden Körpers beschreibt. Solche 3D-Modelle können etwa Quader, Zylinder, Ringflächen oder sogar ganze 3D-CAD-Entwürfe sein. Abhängig von der Position im Raum und den Parametern des 3D-Modells kann man das perspektivische Bild des 3D-Modells berechnen. Hat man nun umgekehrt ein perspektivisches Bild des 3D-Modells, kann man die räumliche Lage und die Strukturparameter des 3D-Modells bestimmen. Da ein geeigneter Bildausschnitt des realen Körpers genau diesem perspektivischen Bild des 3D-Modells entsprechen muss, erhält man so ein in den gegebenen Körper algorithmisch eingepasstes 3D-Modell.

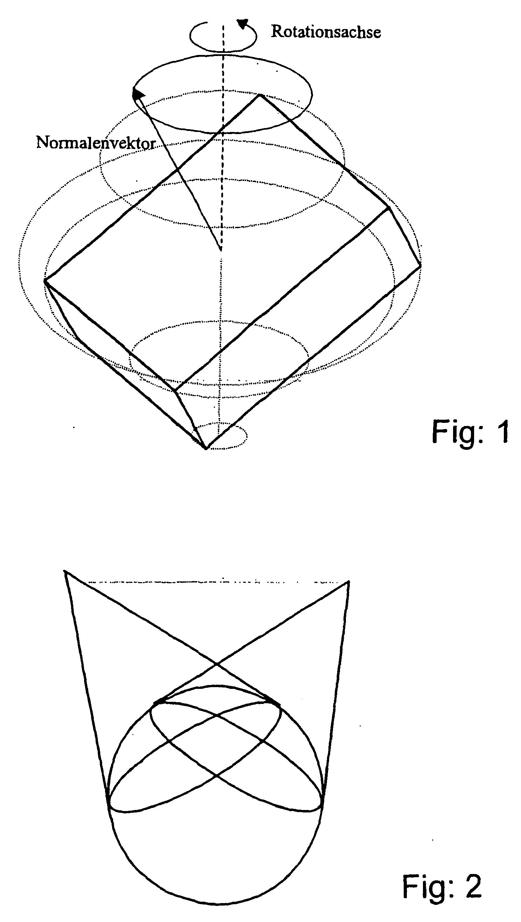

Ist die wahre Rotationsachse des Originalkörpers nicht zugleich eine Rotationssymmetrieachse des eingepassten 3D-Modells, kann man die rotatorische Lage des Originalkörpers aus der Lage des eingepassten 3D-Modells berechnen. So beschreiben etwa die Normalenvektoren einer nicht senkrecht zur Rotationsachse stehenden Schmiegeebene während der Rotation des Originalkörpers einen Kreiskegel, dessen Zentrale die Rotationsachse ist, wie aus Figur 1 ersichtlich ist.

Ist die Rotationsachse einmal bestimmt, kann man durch Anmessen der ausgezeichneten Ebene auch dann auf die Lage der Rotationsachse zurückschließen, wenn sich die Position des rotierenden Körpers zwischenzeitlich verändert haben sollte. Diese Grundidee führt bei der Achsvermessung von Rädern zu der Frage, wie man ein für die unterschiedlichsten Felgengeometrien ausreichend allgemeines lokalisiertes 3D-Modell gewinnen kann.

Dieses Vorgehen benötigt bei genügend reichhaltigen parametrisierten 3D-Modellen grundsätzlich nur eine perspektivische Sicht zur Geometrierekonstruktion. Mehrere Kameras können jedoch aus Gründen der Genauigkeitserhöhung bevorzugt sein.

Anwendung auf die Bestimmung der räumlichen Lage einer Felge

Die räumliche Lage eines Objektes kann auch dann aus perspektivischen Bildern wiedergewonnen werden, wenn man zwar keine verfolgbaren einheitlichen Raumkonturen oder markante Punkte zur Verfügung hat, wohl aber ausreichendes Nebenwissen über die prinzipiell mögliche Geometrie in Form eines parametrisierten 3D-Modells. Dies werde exemplarisch am Beispiel des 3D-Modells einer Ringfläche durchgeführt. Ähnliche Ansätze sind jedoch auch mit anderen lokalen 3D-Modellen möglich. Insbesondere kommen für die Achsvermessung durch Felgenhornapproximation auch verallgemeinerte Ringgeometrien in Frage. Die Querschnittskurven solcher verallgemeinerter Ringflächen sind dann etwa Kreisbogensplines, d.h. stückweise glatt aus Kreisbögen zusammengesetzte Kurven.

Liegt erweitertes Wissen über die Felgengeometrie vor (etwa ein CAD-Entwurf), kann auch ein wesentlich komplexeres 3D-Modell an die Felgengeometrie angepasst werden, wobei dann auch Bereiche abseits vom Felgenhorn zur Approximation in Frage kommen.

Da alle Felgen im Randbereich zum Reifen lokal eine ringförmige Geometrie aufweisen, wird hier eine lokale Ringfläche im Bereich des Felgenrands so angefittet, dass die von der Kamera gesehene Randkontur der Felge und der angefitteten, gedachten Ringfläche gleich werden. Eine solche Ringfläche entspricht einer Schmiegefläche im Bereich des Felgenhorns, genauer der sogenannten extremalen Schattengrenze aus der Sicht der Kamera.

Beleuchtet man einen gegebenen, räumlichen Körper mit einer punktförmigen Lichtquelle, erhält man als Grenzpunktmenge zwischen beleuchteten und unbeleuchteten Regionen auf dem räumlichen Körper eine Vereinigung von Kurven, den Schattengrenzen. Verbindet man jeden Punkt einer Schattengrenze mit dem Lichtquellpunkt durch eine Gerade, entsteht ein Randstrahlenkegel, wie in Figur 2 gezeigt ist.

Bei punktförmiger Beleuchtung einer typischen Felge von der Sichtseite aus gibt es genau eine Schattengrenze, deren Randstrahlenkegel alle anderen Randstrahlenkegel, die beispielsweise von Aussparungen in der Felge herkommen können, enthält. Diese Schattengrenze entspricht der Außenkontur der Felge und wird als extremale Schattengrenze bezeichnet. Ersetzt man die punktförmige Lichtquelle durch eine Lochkamera, deren Projektionszentrum mit dem vorherigen Lichtquellpunkt übereinstimmt, so tritt das perspektivische Bild der extremalen Schattengrenze als Randkontur gegen den Hintergrund, beispielsweise den Reifen auf.

Die extremale Schattengrenze einer Ringfläche oder einer Felge ist im Allgemeinen keine ebene räumliche Kurve, insbesondere kein Kreis, es sei denn, das Projektionszentrum liegt auf der Rotationsachse der Ringfläche oder Felge. Das perspektivische Bild ist in der Regel keine Ellipse. Für zwei Lochkameras mit verschiedenen Projektionszentren sind die extremalen Schattengrenzen verschieden (Figur 2). Dies bedeutet, dass eine Interpretation der Randkontur als Bild einer einheitlichen Raumkurve und damit eine übliche Stereorekonstruktion über Epipolarbedingungen notwendigerweise zu Fehlrekonstruktionen führen muss.

Die extremale Schattengrenze einer Felge variiert zwar je nach Beobachterposition und Radeinschlag, liegt aber typischerweise im Bereich der stärksten Querschnittskrümmung des Felgenhorns. In diesem Bereich sind Felgen rotierend und lassen sich dort sehr gut durch eine Ringfläche annähern, die als Schmiegetorus bezeichnet wird. Die Schattengrenze dieser Ringfläche aus der Sicht der Lochkamera stimmt mit der Schattengrenze der Felge überein. Die zur Rotationssymmetrieachse des Schmiegetorus senkrecht stehende Symmetrieebene wird im Folgenden als Schmiegetorusebene oder Felgenrandebene bezeichnet.

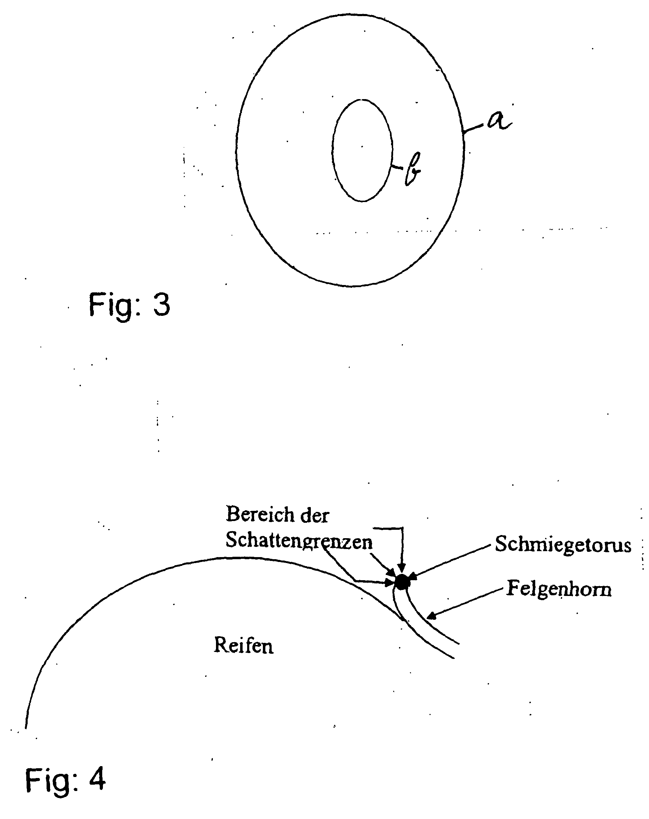

Figur 3 zeigt die Randkonturen beziehungsweise perspektivische Bilder der Schattengrenzen einer Ringfläche. Die äußere Kontur a ist das Bild der extremalen Schattengrenze. -Die Innenkontur b würde dem Ringloch entsprechen. Figur 4 zeigt einen Querschnitt durch die Felgenhornzone eines Kfz-Rades mit eingezeichneter Lage des Querschnittskreises des Schmiegetorus. Die extremale Schattengrenze verläuft in dem mit Pfeilen markieren Bereich, wobei sie die Querschnittsebene durchstößt. Es wird also die extremale Schattengrenze des Schmiegetorus aus der jeweiligen perspektivischen Sicht als anzupassendes 3D-Modell verwendet. Die Parameter der extremalen Schattengrenze des Schmiegetorus bestimmen aber auch den Schmiegetorus selbst eindeutig.

Im folgenden wird die Berechnung der Konturkurven des perspektivischen Bilds einer Ringfläche beschrieben. Um die Schattengrenze einer Ringfläche geschlossen mathematisch zu beschreiben, wird ein Zylinderkoordinatensystem so orientiert, dass die Rotationsebene der Ringfläche die $(r,\varphi)$-Ebene wird und die Rotationsachse die z-Achse. Gegeben sei ein Torus $T$ mit einem Zentralkreisradius R und einem Schnittkreisradius $r$ für eine durch die Rotationsachse des Torus gehende Schnittebene, zentriert um $0 = (0, 0, 0)$ mit Rotationsachse in Richtung $e_3 = (0,0,1)$, $r < R$, d.h dass der Zentralkreis des Torus in der x-y-Ebene liegt. Weiter bezeichne $z = (\zeta_1,\zeta_2,\zeta_3)$ ein zentralperspektivisches Projektionszentrum im Außengebiet des Torus mit $\zeta_3 > r$, sowie $E$ eine Projektionsebene (gleich Chipebene der Kamera) ist, wobei z nicht in E enthalten ist. Ist u der Lotfußpunkt von z in der Projektionsebene E und $(n_1,n_2,n_3)$ eine orthonormale Basis derart, dass

$$n_3 = \frac{z - u}{\|z - u\|}$$

($\|z - u\|$ = Abstand von z und u), wird $(u, n_1, n_2)$ das affine Bildkoordinatensystem in der Projektionsebene, was bedeutet, dass die Richtung von dem optischen Projektionszentrum senkrecht auf die Retinaebene die optische Achse des affinen Koordinatensystems ist.

Bekannt ist:

(1) Zu jedem Punkt $x = (\xi_1, \xi_2, \xi_3) \in T$ gibt es genau einen Winkel $\varphi \in [0,2\pi[$ derart, dass

$$\xi_1 = \sqrt{\xi_1^2 + \xi_2^2} \cos \varphi$$

$$\xi_2 = \sqrt{\xi_1^2 + \xi_2^2} \sin \varphi$$

$\varphi$ heißt "der zu $x$ gehörige Polarwinkel".

(2) Zu jedem Winkel $\varphi \in [0,2\pi[$ gibt es Punkte $x \in T$ mit den folgenden Eigenschaften:

(a) $\varphi$ ist der zu $x$ gehörige Polarwinkel,
(b) $z$-$x$ ist ein Tangentialvektor an $T$ im Punkt $x$, d.h. $x$ ist T-Berührpunkt einer Geraden durch $z$.

$x$ ist also ein Punkt auf der Schattengrenze von $T$ bzgl. des Projektionszentrums $z$. Unter allen Punkten mit den Eigenschaften (a) und (b) sei $s_\varphi$ derjenige mit größtem Nullpunktsabstand (extremaler Schattengrenzpunkt!).

Zur Bestimmung von $s_\varphi$ bezeichne $E_\varphi$ die Ebene durch $e_3$ und durch den auf $e_3$ senkrecht stehenden Einheitsvektor $a_\varphi = (\cos \varphi, \sin \varphi, 0)$. Alle Punkte $x \in T$ mit Polarwinkel $\varphi$ liegen in $E_\varphi$. Speziell gilt $s_\varphi \in E_\varphi$. Die Tangentialebene an $T$ im Punkt $s_\varphi$ steht senkrecht auf $E_\varphi$. Insbesondere ist der Durchschnitt g dieser Tangentialebene mit $E_\varphi$ die Tangente im Punkt $s_\varphi$ an den Torus-Schnittkreis $K$ mit der Gleichung

$$(\xi - R)^2 + \eta^2 = r^2$$

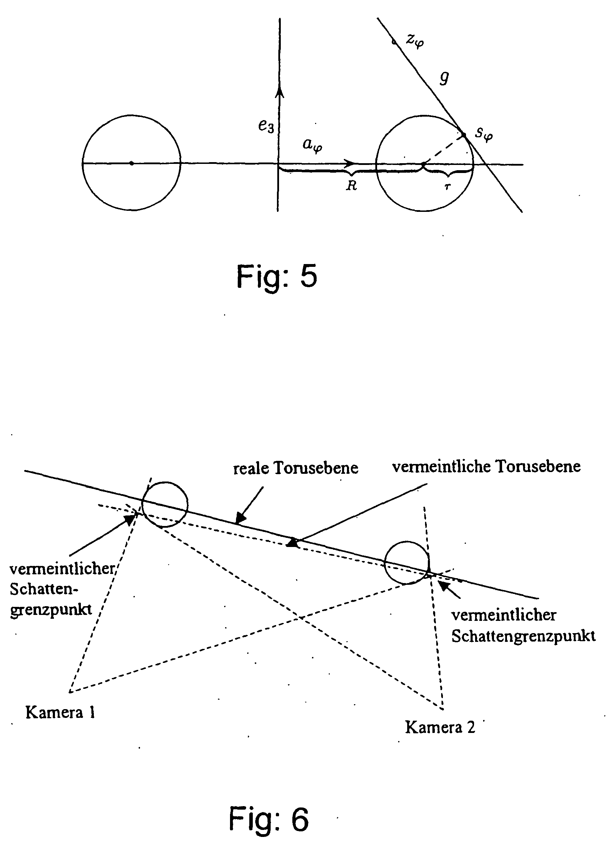

für Punkte $\xi a_\varphi + \eta e_3$ in $E_\varphi$. Der Orthogonalprojektionspunkt $z_\varphi$ von z in $E_\varphi$ (Orthogonalprojektion auf $E_\varphi$ !) liegt auf dieser Tangente (vgl. Figur 5).
Bezeichnet$\langle z| v\rangle$ das Skalarprodukt eines Vektors $v$ und des Vektors $z$, erhält man druch Berechnung der orthogonalen Projektion:

$$z_\varphi = \left\langle z \mid a_\varphi \right\rangle a_\varphi + \left\langle z \mid e_3 \right\rangle e_3 = (\zeta_1 \cos \varphi + \zeta_2 \sin \varphi) a_\varphi + \zeta_3 \cdot e_3$$

Um die Koordinaten $\alpha_\varphi$, $\gamma_\varphi$ von $s_\varphi$ bzgl. Der Basis ($\alpha_\varphi$, $e_3$) der Ebene $E_\varphi$ zu bestimmen, beachte man, dass die Tangente g den Schnittkreis $K$ berührt. Ein Punkt $\xi \cdot \alpha_\varphi + \eta \cdot e_3$ in $E_\varphi$ liegt genau dann auf der Tangente g an $K$ im Punkt $s_\varphi = \alpha_\varphi \alpha_\varphi + \gamma_\varphi \cdot e_3$ ($\alpha_\varphi$, $\gamma_\varphi$ noch zu bestimmen!), wenn

$$(\xi - R)(\alpha_\varphi - R) + \gamma_\varphi \eta = r^2.$$

Der Punkt $z_\varphi$ muss auf dieser Tangente liegen. Also gilt:

$$((\zeta_1 \cos \varphi + \zeta_2 \sin \varphi) - R)(\alpha_\varphi - R) + \zeta_3 \cdot \gamma_\varphi = r^2$$

und

$$(\alpha_\varphi - R)^2 + \gamma_\varphi^2 = r^2.$$

Setzt man $\rho_\varphi \underline{def} \zeta_1 \cos \varphi + \zeta_2 \sin_\varphi - R$, erhält man aus

$$\zeta_3^2(\alpha_\varphi - R)^2 + \zeta_3^2 \gamma_\varphi^2 = \zeta_3^2 r^2 : \zeta_3^2(\alpha_\varphi - R)^2 + (r^2 - \rho_\varphi(\alpha_\varphi - R))^2 = r^2 \zeta_3^2. \text{ Es folgt}$$

$$(\alpha_\varphi - R)^2(\zeta_3^2 + \rho_\varphi^2) - 2(\alpha_\varphi - R) \cdot \rho_\varphi \cdot r^2 = r^2(\zeta_3^2 - r^2).$$

Man erhält

$$\alpha_\varphi - R = \frac{\rho_\varphi r^2}{\zeta_3^2 + \rho_\varphi^2} \pm \sqrt{r^2 \frac{\zeta_3^2 - r^2}{\zeta_3^2 + \rho_\varphi^2} + \frac{\rho_\varphi^2 r^4}{(\zeta_3^2 + \rho_\varphi^2)^2}} = r \cdot \frac{\rho_\varphi r \pm |\zeta_3| \sqrt{\zeta_3^2 + \rho_\varphi^2 - r^2}}{\zeta_3^2 + \rho_\varphi^2}.$$

Weil $s_\varphi$ der Berührpunkt mit größter Norm in der Darstellung von Figur 5 ist, erhält man:

$$\alpha_\varphi = R + r \cdot \frac{\rho_\varphi r + \zeta_3 \sqrt{\zeta_3^2 + \rho_\varphi^2 - r^2}}{\zeta_3^2 + \rho_\varphi^2}$$

und

$$\gamma_\varphi = \frac{1}{\zeta_3}\left( r^2 - \rho_\varphi \cdot r \frac{\rho_\varphi r + \zeta_3 \sqrt{\zeta_3^2 + \rho_\varphi^2 - r^2}}{\zeta_3^2 + \rho_\varphi^2} \right)$$

$$= \frac{1}{\zeta_3(\zeta_3^2 + \rho_\varphi^2)}\left( \zeta_\varphi^2 r^2 - \zeta_3 \sqrt{\zeta_3^2 + \rho_\varphi^2 - r^2} \cdot \rho_\varphi \cdot r \right) = \frac{r\left( r\zeta_3 - \sqrt{\zeta_3^2 + \rho_\varphi^2 - r^2} \cdot \rho_\varphi \right)}{\zeta_3^2 + \rho_\varphi^2}.$$

Die Funktionsgleichung der extremalen Schattengrenzkurve (in Abhängigkeit von φ), die die Punkte der Schattengrenze enthält, ist damit $\varphi \to s_\varphi = \alpha_\varphi \alpha_\varphi + \gamma_\varphi e_3$ mit diesen Einsetzungen für $\alpha_\varphi$ und $\gamma_\varphi$.

Um das zentralperspektivische Bild der extremalen Schattengrenze, also die Randkontur zu ermitteln, benötigt man zunächst die Zentralprojektion $p$ in die Projektionsebene $E$ mit Projektionszentrum $z$.

Für jeden Punkt $x$ des Raumes, der nicht auf der zu $E$ parallelen Ebene durch $z$ liegt, gilt:

$$\frac{p(x) - u}{\|z - u\|} = \frac{x - z - \langle x - z | n_3 \rangle n_3}{\langle x - z | n_3 \rangle}$$

Hierbei ist $\|z - u\|$ die Länge des Vektors $z$-$u$, also der Abstand des Projektionszentrums $z$ von der Projektionsebene $E$, und $\langle x - z | v \rangle$ bezeichnet wieder das Skalarprodukt von $x$-$z$ mit einem Vektor $v$. Es folgt

$$p(x) = u + \frac{\|z - u\|}{\langle x - z | n_3 \rangle} \cdot \left( \langle x - z | n_1 \rangle n_1 + \langle x - z | n_2 \rangle n_2 \right)$$

weil $x - z = \langle x - z | n_1 \rangle n_1 + \langle x - z | n_2 \rangle n_2 + \langle x - z | n_3 \rangle n_3$.

Durch Einsetzen von $s_\varphi$ in $p$ erhält man die Randkontur: $\varphi \to p(s_\varphi)$ in kartesischen Koordinaten.

In Bildkoordinaten der Projektionsebene $E$ ist

$$\varphi \rightarrow \begin{pmatrix} \langle p(s_\varphi) - u | n_1 \rangle \\ \langle p(s_\varphi) - u | n_2 \rangle \end{pmatrix} = \frac{\| z - u \|}{\langle s_\varphi - z | n_3 \rangle} \cdot \begin{pmatrix} \langle s_\varphi - z | n_1 \rangle \\ \langle s_\varphi - z | n_2 \rangle \end{pmatrix}$$

die Funktionsgleichung der Randkontur, d.h. der Schattengrenze.

Man beachte, dass die Funktionsgleichung der Randkontur nicht nur von $r$ und $R$ sondern auch von der relativen Lage von $z$ und $E$ in Bezug auf den Torus $T$ abhängt. Hält man $z$ und $E$ fest und bewegt den Torus, erhält man die gleiche Randkontur, als hätte man den Torus in Normallage belassen, aber $z$ und $E$ invers bewegt. Die Gestalt der Randkontur bestimmt also die relative Lage der Hauptebene des Torus in Bezug auf das Kamerakoordinatensystem $(n_1, n_2, n_3)$.

Setzt man nach Festlegung des Normalenvektors der Retinaebene und des Fokusabstands des Projektionszentrums von der Retinaebene über die hierdurch festgelegte Zentralprojektion p. Der zu φ gehörige Randkonturpunkt ist dann p($s_\varphi$), der in Bildkoordinaten wie oben beschrieben ausgedrückt werden kann.

Es ist zu beachten, dass die inhärenten Parameter dieser Zentralprojektion, nämlich die Position z des Projektionszentrums, der Fokusabstand und der Normalenvektor der Retinaebene im Rahmen einer Kalibrierung der Kamera erhalten werden. Sie sind deshalb vor dem Meßprozeß bekannt.

Ziel der im Folgenden erläuterten Berechnung ist die Rekonstruktion der Schmiegetorusfläche aus der Randkontur, d.h. der perspektivischen Sicht der extremalen Schattengrenze am Felgenhorn. Dazu werden die Modellparameter des Schmiegetorus (im Rahmen einer nicht-linearen Optimierungsroutine) solange verändert, bis die Außenkontur des Schmiegetorus mit der gemessenen extremalen Schattengrenze der Felge zur Deckung kommt. Der Normalenvektor der Rotationsebene des Schmiegetorus kann dann zu einer präzisen Rekonstruktion der Drehachse verwendet werden.

Die Rekonstruktion des Schmiegetorus aus der Randkontur läßt sich als nicht-lineares Optimierungsproblem formulieren. Die extremale Schattengrenze einer Ringfläche hängt von den folgenden Parametern ab: Hauptradius R und Nebenradius r des Torus, Position c des Toruszentrums und Normalenvekor n der Rotationsebene des Torus in Bezug auf das Kamerakoordinatensystem $(n_1, n_2, n_3)$ sowie von der Position z des Projektionszentrums der Lochkamera. Da z vorab durch Kalibrierung bestimmt wird, soll diese Abhängigkeit im Folgenden nicht mehr erwähnt werden. Bis auf eine Koordinatentransformation des Normalenvektors n auf die z-Achse und des Toruszentrums c in den Ursprung ist die Gleichung der extremalen Schattengrenze oben hergeleitet worden.

Um die Abhängigkeit dieser Darstellung von den Parametern R,r,c und n auszudrücken, betrachte man die Konturpunkte $p(s_\varphi)$ als Funktion. Diese ergibt sich aus obiger Darstellung von $p(s_\varphi)$, wenn man die Umrechnung von Kamerakoordinaten auf das oben verwendete Koordinatensystem vorschaltet.

Hat man nun ausreichend viele Randkonturpunkte $x_1,...,x_n$ aus dem zentralperspektivischen Bild der Lochkamera ermittelt und sind die Kameraparameter und damit die Lage des Projektionszentrums z, des Hauptpunktes u sowie das Kamerakoordinatensystem $(n_1,n_2,n_3)$ aus einer Vorabkalibrierung bekannt, sucht man Parametervektoren c und n sowie Radien r,R derart, dass für geeignete zu $x_1,...,x_n$ undzugehörige Polarwinkel $\varphi_1,..., \varphi_n$ das Fehlerquadrat

$$\sum_{i=1}^{n} \| f(R,r,c,n,\varphi_i) - x_i \|^2$$

minimal wird. Hierbei bezeichnet $\|y\text{-}z\|$ den euklidischen Abstand zweier Punkte y,z in der Bildebene.

Bei bekanntem Schmiegetorusradius R kann dieser fest eingesetzt und damit als Unbekannte eliminiert werden. Die Ermittlung der zu den Randpunkten $x_1,...,x_n$ gehörigen Winkelargumente $\varphi_1,..., \varphi_n$ müsste im Idealfall seinerseits in die Gesamtminimierung mit einbezogen werden. Im hier vorliegenden Fall reicht jedoch eine gute Vorapproximationsheuristik aus, um diese Winkelargumente mit hoher Genauigkeit zur Verfügung zu stellen. Während der Normalenvektor n der Schmiegetorusebene auch aus einer Perspektive eindeutig ermittelbar ist, gilt dies nicht mehr für c,r,R. Bei bekanntem R reicht jedoch eine Monokamerasicht aus.

Auch aus Gründen der höheren Fehlerstabilität, insbesondere bei einer Beobachterposition in der Nähe der Rotationsachse der Felge, werden zwei Kameras in genau vermessener räumlicher Position (Stereosystem) verwendet. Die obige Quadratsumme ist dann mit einem gleichartigen Fehlerterm für die zweite Lochkamera zu versehen.

Zur hinreichend genauen Ermittlung der Randkonturen der Felge gegen den Reifenhintergrund sind normale Konturextraktionsverfahren der Bildverarbeitung wegen des oft schwach ausgeprägten Kontrastes der Felgenhornaußenseite gegen den Reifen nicht ausreichend. Daher werden verfeinerte Konturschätzer unter Einbeziehung des Nebenwissens über die torischen Randgeometrieverhältnisse eingesetzt.

Wird die Raddrehachse im Raum verändert, führt das Rad eine freie Bewegung im Raum aus (Translation und Rotation). Da die relative Lage der Drehachse im Verhältnis zum angepassten 3D-Modell bei einer Achsvermessung konstant bleibt, kann man auf die Lage der Drehachse aus der Lage des angepassten 3D-Modells zurückschließen. Hat das angepasste 3D-Modell zusätzlich Symmetrien, benötigt man lageidentifizierende Kenngrößen. Bei einem Schmiegetorus ist hierzu eine Polarwinkelangabe in der Schmiegetorusebene nötig.

Dieser Polarwinkel kann etwa durch Erfassung der rotatorischen Position des Radventils bestimmt werden. Prinzipiell sind jedoch auch viele andere Arten der Drehwinkelermittlung möglich. Wegen der in der Regel eher geringen Abweichung der Zentrale des Schmiegetorus gegenüber der Rotationsachse des Rades reicht zur Bestimmung der Drehachslage im Raum im Allgemeinen eine Genauigkeit dieses Drehwinkels etwas unter 1 Winkelgrad aus.

Wie bereits erwähnt, unterscheiden sich die Schattenkonturen der Felge je nach perspektivischer Beobachtungsposition, wie anhand von Figur 2 erläutert wird. Aus Figur 6 ist nun ersichtlich, dass dies zu einer Fehlrekonstruktion durch klassisches Stereomatching bei einer ringförmigen Objektgeometrie führt. Die Schnittpunkte der Sichtstrahlen von Randkonturen liegen nicht auf einer Parallelen zur Torusebene. Die auf beiden Kameras gesehenen Randkonturen stammen für verschiedene Sichtpositionen von verschiedenen Raumkurven. Führt man deshalb in der irrigen Annahme, es handle sich um ein und dieselbe Raumkurve, eine klassische Stereorekonstruktion (durch Schnitt der vermeintlichen Sichtstrahlen) durch; gelangt man zu Fehlrekonstruktionen von nicht auf der Felge liegenden Raumkurven, die man für den realen Felgenrand hält. Die Passebene einer solchen scheinbaren Felgenrandkurve stimmt im Allgemeinen nicht mit der oben beschriebenen Schmiegetorusebene überein. Insbesondere bei stärkerem Lenkradeinschlag sind die Abweichungen der jeweiligen Normalenvektoren nicht mehr zu vernachlässigen.

Die Fahrwerkvermessungseinrichtung

Figur 6 zeigt die geometrischen Verhältnisse, die allgemein anhand von Figur 1 dargestellt wurden in Bezug auf die Verhältnisse bei einer Felge beziehungsweise einem Rad für ein Kraftfahrzeug. Wenn der Torus auf den Felgenrand gefittet ist, ist die Torusebene die Felgenrandebene. Diese ist auch bei gedrehtem Rad mit hoher Genauigkeit rekonstruierbar. Es handelt sich also um eine ausgezeichnete Ebene des Rads. Die Annahme, dass der Normalenvektor dieser Ebene ein Vektor in Richtung der Drehachse sei, ist jedoch im Allgemeinen falsch (Felgenschlag!). Durch Rotieren des Rades bei kontrolliertem Drehwinkel wird sich aber der Normalenvektor der Felgenrandebene auf einem Rotationskegel um die wahre Drehachse bewegen. Aus mindestens drei solchen rotierten Positionen lässt sich nun die wahre Drehachse des Rades berechnen und ihre Raumwinkelstellung zum Normalenvektor der Felgenrandebene angeben. Diese festgelegte, konstante Beziehung zwischen dem Normalenvektor der Felgenrandebene und der Drehachse erlaubt es später, allein aus der Kenntnis der Felgenrandebene und des Rotationswinkels des Rades die Drehachse präzise zu bestimmen.

Nur bei fertigungstechnisch zugesicherten felgenschlagfrei montierten Rädern kann die Gleichheit des Normalenvektors der Felgenrandebene mit dem wahren Drehachsvektor angenommen werden. In jedem Fall muss die Felgenrandebene zur Drehachsermittlung bestimmt werden.

Die Position des Toruszentrums ist bei idealen Felgen als Durchstoßpunkt der Raddrehachse durch die repräsentative Felgenebene anzusehen und ergibt zusammen mit dem Normalenvektor das Meßergebnis des Stereomeßsystems.

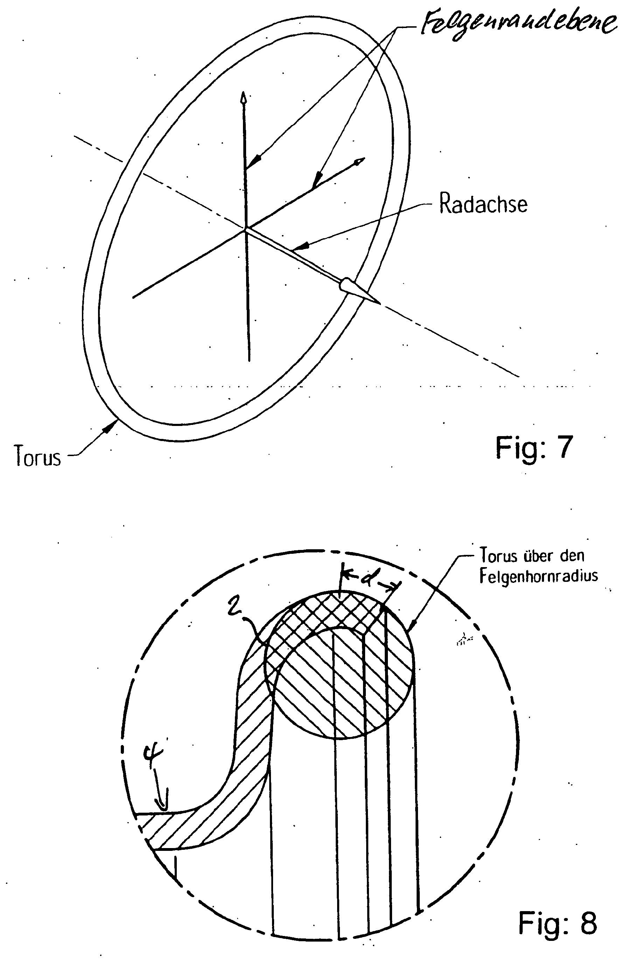

Figur 8 zeigt schematisch das Felgenhorn 2 einer Felge 4. Wie ersichtlich ist, wird der Felgenhornradius in dem Bereich, der von einer seitlich von dem Felgenrand angeordneten Kamera erfaßt wird, in guter Nährung durch den Torus dargestellt.

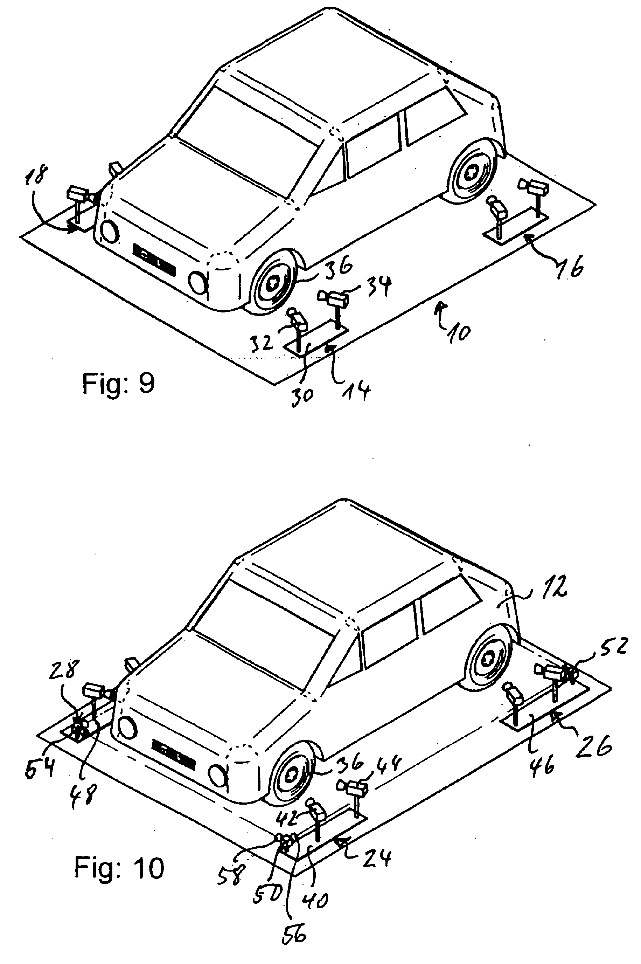

Figur 9 zeigt einen Meßplatz 10, auf dem ein Kraftfahrzeug 12 steht, dessen. Fahrwerk Vermessen werden soll. Auf dem Meßplatz 10 sind vier Meßgeräte, ortsfest angeordnet, von den drei Meßgeräten 14, 16, 18 gezeigt sind, während das vierte Meßgerät durch das Kraftfahrzeug verdeckt ist. Figur 10 zeigt einen Meßplatz 20, mit dem Kraftfahrzeug 12, wobei wiederum drei Meßgeräte 24, 26, 28 gezeigt sind, während das vierte Meßgerät durch das Kraftfahrzeug verdeckt ist.

Die Meßgeräte 14, 16, 18 umfassen jeweils eine Bodenplatte 30 und zwei Kameras 32, 34, die unter unterschiedlichen Winkeln zu dem zugehörigen Rad 36 des Kraftfahrzeugs 12 gerichtet sind. Bei dem Ausführungsbeispiel von Figur 9 sind die Meßgeräte 14, 16, 18 fest auf dem Meßplatz 10 montiert, wobei die relativen Winkellagen der Meßgeräte untereinander sowie deren Abstände bei der Montage festgestellt werden und dann unverändert bleiben.

Bei dem Ausführungsbeispiel von Figur 10 weisen die Meßgeräte 24, 26, 28 wiederum eine Bodenplatte 40 und zwei Kameras 42, 44 auf, die unter unterschiedlichen Winkeln auf das zugehörige Rad 36 gerichtet sind. Auf den Grundplatten 40, 46, 48 der Meßgeräte 24, 26, 28 sind Bezugsystem-Meßköpfe 50, 52, 54 vorgesehen, die eine optische Vermessung der relativen Winkellagen und der Abstände der Meßgeräte 24, 26, 28 (und des durch das Kraftfahrzeug 12 verdeckten Meßgeräts) gestatten. Dazu hat jeder Meßkopf, wie beispielsweise der Meßkopf 50 zwei Sende/Empfangseinheiten 56, 58, die zu dem in Längsrichtung des Fahrzeuges gegenüberliegenden Meßkopf beziehungsweise zu den quer zu dem Fahrzeug gegenüberliegenden Meßkopf gerichtet sind. Mit einem derartigen Bezugsmeßsystem genügt eine grob justierte Aufstellung der Meßgeräte 24, 26, 28, und die genaue Bestimmung der relativen Lagen und der Abstände der Meßgeräte zueinander kann laufend gemessen und auch nachjustiert werden.

Die Kalibrierung des Stereo-Meßsystems umfaßt die Kalibrierung der "Inneren Kameraparameter" und die Kalibrierung der Einbausituation der Meßgeräte. Als "innere Parameter" werden alle Parameter bezeichnet, die kameraspezifisch sind, d.h. durch den Zusammenbau der Kamera festgelegt sind. Innere Parameter werden festgelegt durch die Einbaulage des optischen Sensors, das Objektiv und dessen Einbaulage, die Blendeneinstellung und Fokuseinstellung. Bei Zoom-Objektiven ist zudem die eingestellte Brennweite entscheidend. Die inneren Parameter können so lange als konstant angesehen werden, wie keine mechanische Veränderung an der Kamera oder Änderung der Objektiveinstellung vorgenommen wird. Die Parameter werden mit Hilfe von vollständig bekannten Objekten bestimmt. Vorzugsweise derzeit die Kalibrierung mit einem 3D-Objekt, wie z.B. einer mit ausreichend vielen markanten Punkten versehenen Anordnung planarer Targets in verschiedenen Raumlagen.

Die Kalibrierung der Einbausituation beim Zusammenbau zweier Kameras in einem Meßgerät zu einem Stereo-Meßsystem muss bezogen auf das Koordinatensystem des Meßgeräts erfolgen. Dazu werden an dem Meßgerät entsprechende Steckachsen, Anlageflächen und/oder Indexstifte vorgesehen, bezüglich denen sowohl das eingebaute Bezugsmeßsystem als auch das Stereomeßsystem kalibriert werden können. Alternativ kann eine optische Kalibrierung vorgenommen werden.

Die Qualität der Beleuchtung wird anhand der vorhandenen Meßbilder überprüft. Dabei wird auf ausreichende Segmentierbarkeit, d.h. die Qualität des Kontrasts der Schattengrenze geprüft. Ist keine ausreichende Segmentierbarkeit gegeben, wird die Beleuchtung nachgestellt.

Die Messung der Bezugssystem -/Referenzsystem-Daten ist mit Ausnahme der Abstandsmessung identisch mit dem Verfahren bei den sich bekannten Fahrwerkvermessungssystemen. Ergebnisse des Messung des Bezugssystems sind die Lage der einzelner Meßgeräte zueinander, einschließlich Abstand, und die Lage der einzelner Meßgeräte zur Senkrechten. Die Abstandsmessung wird über die Winkelmessung zweier lichtemittierenden Dioden (LED's) mit bekanntem Abstand vorgenommen.

Ablauf der Messungen

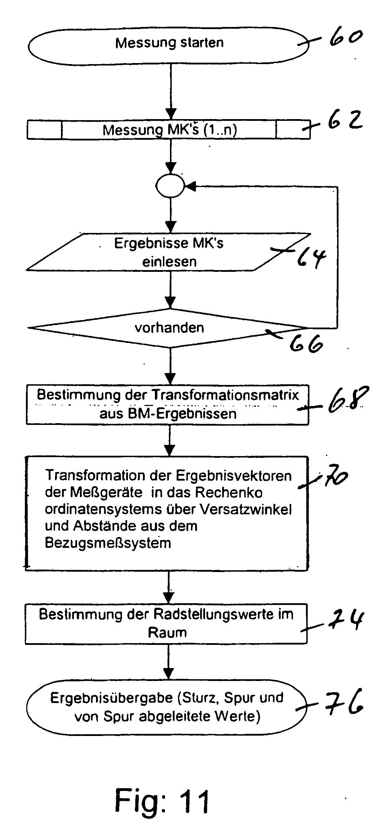

Figur 11 zeigt ein schematisches Ablaufdiagramm der Messung, wobei davon ausgegangen wird, dass die oben genannten Messungen des Bezugssystems und die Kalibrierung der Meßgeräte abgeschlossen ist. Im Schritt 60 wird die Messung gestartet. Neben Schritt 62 werden die Messungen der einzelnen Meßgeräte 14, 16, 18 beziehungsweise 24, 26, 28 durchgeführt, wobei die Meßergebnisse in den Schritten 64, 66 in einem Rechner (nicht gezeigt) eingelesen werden. Der Rechner bestimmt in dem Schritt 68 die Transformationsmatrix aus den Ergebnissen der Bezugssystemessung (BM-Ergebnisse), das heißt aus den Ergebnissen der Bezugssystemessung. In dem Schritt 70 werden die Ergebnisvektoren der Stereomessung der Meßgeräte (MK) in das Rechenkoordinatensystems über Versatzwinkel und Abstände aus dem Bezugsmeßsystem (RKS-Achsen) transformiert, wobei ein Koordinatensystem der Meßgeräte als Rechenkoordinatensystem willkürlich festgelegt wird. In dem Schritt 74 bestimmt dann der Rechner die Radstellungswerte im Raum, das heißt insbesondere die einzelnen Spurwinkel der Vorderräder, der Gesamtspurwinkel der Vorderräder, die sogenannte geometrische Fahrachse und dergleichen, wie es bei herkömmlichen Fahrwerkvermessungseinrichtungen üblich ist. Dabei wird die Stellung der Ergebnisvektoren zueinander in dem Rechenkoordinatensystem ausgewertet, und daraus werden die entsprechenden Fahrwerkmesswerte berechnet. In dem Schritt 76 werden schließlich die Ergebnisse zu den Radstellungswerten, nämlich Sturz, Spur und von der Spur abgeleitete Winkelwerte an eine Anzeigeeinrichtung übergeben und/oder zur weiteren Verwendung gespeichert.

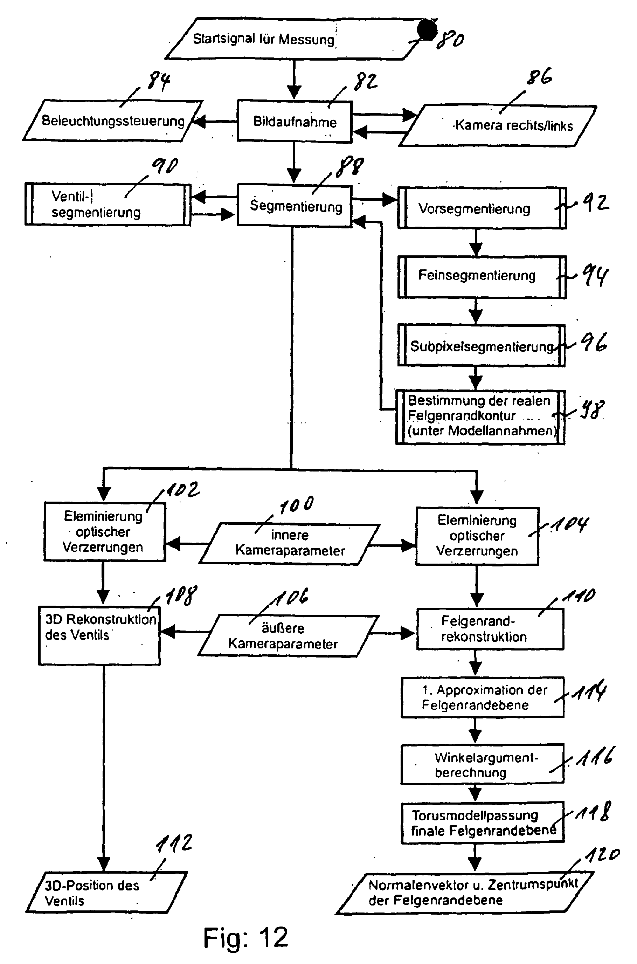

Figur 12 zeigt ein Ablaufdiagramm der Messungen in einem Meßgerät in etwas größerem Detail. In dem Schritt 80 wird ein Startsignal für die Messung gegeben. Darauf wird im Schritt 82 die Bildaufnahme gestartet, wobei zunächst in Schritt 84 überprüft wird, ob die Beleuchtung für die Messung ausreichend ist, und gegebenenfalls wird die Beleuchtung nachgestellt. Die Nachstellung kann eine größere oder geringere Helligkeit des Lichtes für die Beleuchtung umfassen, wobei jedenfalls das Ziel darin besteht, einen möglichst guten Kontrast des von den Kameras beobachteten Teils der Felge beziehungsweise des Felgenhorns zu erhalten. In dem Schritt 86 sind die Kameras, die rechts beziehungsweise links im Bezug auf die Radachse angeordnet sind, aktiv und dienen sowohl zur Überprüfung der Beleuchtungssituation als auch, nach abgeschlossener Einstellung der Beleuchtung, zur Aufnahme der Stereobilder der Radfelge. Im Schritt 88 erfolgt eine Segmentierung der Felge, wobei im Schritt 90 eine Segmentierung des Ventils des Kraftfahrzeugrades erfolgt, das heißt die Winkellage des Ventils wird festgestellt. Die Schritte 92 bis 98 dienen der Segmentierung des Felgenrandes, wobei im Schritt 92 eine Vorsegmentierung, im Schritt 94 eine Feinsegmentierung, im Schritt 96 eine Subpixelsegmentierung und im Schritt 98 eine Bestimmung der realen Felgenrandkontur unter Berücksichtigung von Modelannahmen stattfindet. Diese Segmentierung wird vorgenommen, um bestimmte Winkelbereiche des Felgenrandes auszumessen und die gemessenen Werte bei der Ermittlung der Felgenrandebene berücksichtigen zu können.

Im Schritt 100 werden die bisherigen Meßergebnisse unter Berücksichtigung der inneren Kameraparameter umgerechnet, um in dem Schritt 102 optische Verzerrungen bei der Bestimmung der Lage des charakteristischen Merkmals (z.B. des Ventils) und in dem Schritt 104 optische Verzerrungen im Bezug auf die Bilder des Felgenrandes zu eliminieren. Im Schritt 106 werden unter Berücksichtigung der äußeren Kameraparameter im Schritt 108 die 3D-Lage des Ventils rekonstruiert und in dem Schritt 110 die Lage des Felgenrandes rekonstruiert. Das Resultat des Schritts 108 ist die Information über die 3D-Position des Ventils (Schritt 112). Zur Felgenrandrekonstruktion wird zunächst im Schritt 114 eine erste Approximation der Felgenrandebene durchgeführt. Sodann wird in dem Schritt 116 das Winkelargument berechnet, und in dem Schritt 118 erfolgt eine Torusmodellanpassung beziehungsweise die endgültige Bestimmung der Felgenrandebene. Im Schritt 120 wird das Ergebnis der Berechnung, nämlich der Normalenvektor und der Zentrumspunkt der Felgenrandebene, angezeigt und/oder für die weitere Verrechnung gespeichert. Die in den Schritten 112 und 120 festgehaltenen Ergebnisse werden dann zur Berechnung der Radstellungswinkelwerte weiter verarbeitet, wie unter Bezugnahme auf Figur 11 in den Schritten 68 bis 76 beschrieben wurde.

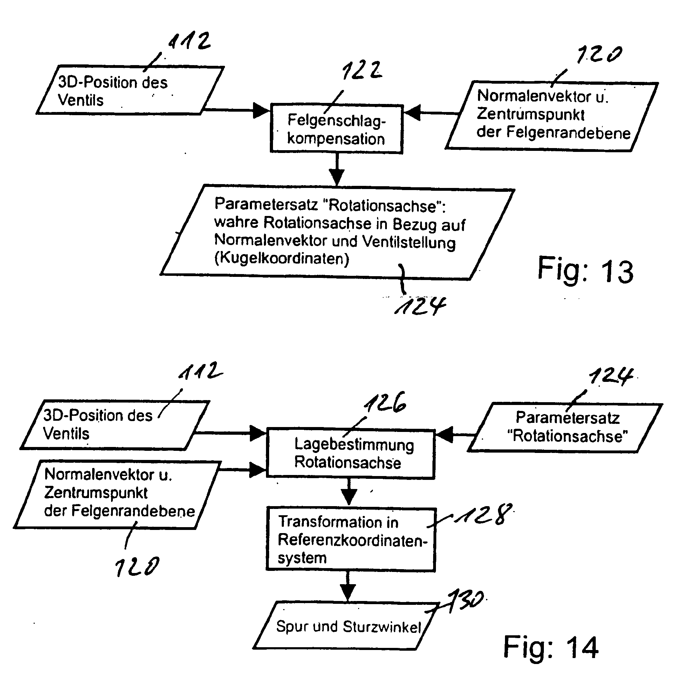

Figur 13 zeigt ein schematisches Ablaufdiagramm für die Fortsetzung des in Figur 12 gezeigen Verfajrens zum Zwecke der Felgenschlagkompensation. Zur Felgenschlagkompensation im Schritt 122 werden die in den Schritten 112 und 120 (Figur 12) erhaltenen Ergebnisse über die 3D-Position des charakteristischen Merkmals, z.B des Ventils, beziehungsweise den normalen Vektor und den Zentrumspunkt der Felgenrandebene berücksichtigt, um einen Parametersatz "Rotationsachse", das heißt die wahre Rotationsachse in Bezug auf den normalen Vektor und die Ventilstellung in Kugelkoordinaten zu erhalten. Die Messung der Raddrehung wird bei der Durchführung und Überwachung der Felgenschlagkompensation, bei der Bestimmung der Spreizung im Rahmen einer Einschlagvermessung und bei der Bestimmung der Nachlaufänderung bei der Nachlaufeinstellung benötigt. Für die Durchführung und Überwachung der Felgenschlagkompensation ist eine geringere Meßgenauigkeit erforderlich. Eine Auflösung der Raddrehung auf ca. 10 Winkelminuten ist ausreichend. Zudem sollte eine beliebige Drehung des Rades erkannt werden können, wozu die Verfolgung und Vermessung des Ventils ausreicht. Das Ventil ist einzigartig am Umfang und kann mit entsprechender Genauigkeit lokalisiert werden.

Zur Bestimmung der Spreizung im Rahmen einer Einschlagvermessung und der Bestimmung der Nachlaufänderung bei der Nachlaufeinstellung ist die Raddrehung mit einer Genauigkeit von mindestens 2 Winkelminuten zu bestimmen. Allerdings muss keine beliebige Drehung des Rades gemessen werden können. Dazu kann die Bestimmung der 3D-Position des Ventils durchgeführt werden. Alternative kann die Vermessung und Verfolgung von nicht rotierenden Kanten beziehungsweise Strukturen oder Merkmalen in der Felge durchgeführt werden, wobei entsprechende Algorithmen wie zur Felgenrandbestimmung zur Anwendung kommen können.

Figur 14 zeigt ein schematisches Ablaufdiagramm zur Berechnung der Spur- und Sturzwinkel aus den Ergebnissen der Schritte 112 und 120 der Figur 12 und dem Schritt 124 von Figur 13, d.h. die Endgültige Berechung der Spur- und Sturzwinkel unter Berücksichtigung des Felgenschlags. Mit anderen Worten wird die Information über die 3D-Position des Ventils und die Information über den normalen Vektor und den Zentrumspunkt der Felgenrandebene sowie der Parametersatz "Rotationsachse" im Schritt 126 zur Lagebestimmung der Rotationsachse verwendet. Das Ergebnis des Schritts 126 wird in dem Schritt 128 in das Referenzkoordinatensystem des Rechners transformiert, der daraufhin im Schritt 130 die Spur- und Sturzwinkel berechnet.

Im Folgenden werden die Berechnungsgrundlagen für die Berechnung der Fahrwerkparameter beschrieben.

Begriffe:

| | | |
|---|---|---|
| BM | Bezugsmesssystem | Derzeit vorhandenes Standard-Winkelmesssystem mit eigenem Koordinatensystem. |
| $BM_i$ | | Mehrere an entsprechenden Rädern positionierte Bezugsmesssysteme. |
| KMK | Koordinatensystem MK | Rechtwinkliges Rechtssystem. Ursprung in Spur-LED der Kamera 2 des BM. x-Richtg.: längs BM (nicht Fahrtrichtung) y-Richtg.: Steckachsenaufnahme BM - Rad z-Richtg.: entgegen ErdschwerkraftGekennzeichnet durch Apostroph. |
| $KMK_i$ | | Koordinatensysteme der entsprechenden Messköpfe MKi. |
| RKS | Rechen Koordinatensystem | Willkürlich aber sinnvoll festgelegtes Koordinatensystem zur Verrechnung aller MK zu einer Fahrwerkvermessung. |
| i =1...x | | Die Nummerierung 1...x der einzelnen System erfolgt entsprechend der derzeitigen Konvention für Messwertaufnehmer. |

Meß- und Rechengrößen:

| | |
|---|---|
| $d_v$ | Abstand MK's Querspur vorne |
| $d_h$ | Abstand MK's hinten |
| $d_l$ | Abstand MK's links |
| dr | Abstand MK's rechts |
| A, B, C, D, E, F, G, H | Spurwinkel des Bezugssystems |
| I, K, L, M, N, O, P, Q | Neigungswinkel des Bezugssystems |
| (x', y', z') | Vektor im KMK (Koordinatensystem Meßgerät) |
| (x", y", z") | Vektor parallel zum RKS (Rechen-Koordinatensystem) |
| (x, y, z) | Vektor im RKS (Rechen-Koordinatensystem) |
| $x_n, y_n, z_n$) | Richtungsvektor der Radachse radauswärts |

Ergebnisvektor

Das Einzel-Stereo-Messsystem i hat folgenden Ergebnisvektor im Koordinatensystem des Meßgerät (Meßsskopf) i (KMK$_i$).

$$\vec{e}_i' = \begin{pmatrix} x_i' \\ y_i' \\ z_i' \end{pmatrix} * \lambda_i \begin{pmatrix} x_{in}' \\ y_{in}' \\ z_{in}' \end{pmatrix};$$

Transfomation in das RKS

Die Ergebnisvektoren werden mit Hilfe der Ergebnisse aus dem Bezugssystem in das Rechenkoordinatensystem transformiert.

Schritt 1:

Transformation der Ergebnisvektoren in ein horizontiertes Koordinatensystem und in ein Koordinatensystem, das in allen Richtungen parallel zum RKS liegt.
Zusammengesetzte Rotation vom Typ Cardan:

$$\begin{pmatrix} x'' \\ y'' \\ z'' \end{pmatrix} = R_z(\tau) R_y(\kappa) R_x(\gamma) \begin{pmatrix} x' \\ y' \\ z' \end{pmatrix};$$

Schritt 2:

Verschiebung der Anfangspunkte der Vektoren in das RKS.
Dabei werden folgende Versatzwinkel definiert:

Festlegung KMK$_4$ = RKS
Versatzwinkel KMK$_2$ zu KMK$_4$: $f_{24}$ = (F+D)/2;
Versatzwinkel KMK$_3$ zu KMK$_4$: $f_{34}$ = (H+G)/2;
Versatzwinkel KMK$_1$ zu KMK$_3$: $f_{13}$ = (E+C)/2;

wobei.

C,E: gegenüberliegende Spursensoren links

D,F: gegenüberliegende Spursensoren rechts

G,H: gegenüberliegende Spursensoren hinten

Verschiebung $KMK_2$ in RKS

$$\begin{pmatrix} x_2 \\ y_2 \\ z_2 \end{pmatrix} = \begin{pmatrix} x_2'' \\ y_2'' \\ z_2'' \end{pmatrix} + \begin{pmatrix} d_r * \cos(\varphi_{24}) \\ d_r * \sin(\varphi_{24}) \\ 0 \end{pmatrix};$$

Verschiebung $KMK_3$ in RKS

$$\begin{pmatrix} x_3 \\ y_3 \\ z_3 \end{pmatrix} = \begin{pmatrix} x_3'' \\ y_3'' \\ z_3'' \end{pmatrix} + \begin{pmatrix} -d_h * \sin(\varphi_{34}) \\ d_h * \cos(\varphi_{34}) \\ 0 \end{pmatrix} + \begin{pmatrix} w * (\cos(\tau_3) - 1) \\ w * \sin(\tau_3) \\ 0 \end{pmatrix};$$

Verschiebung $KMK_1$ in RKS

$$\begin{pmatrix} x_1 \\ y_1 \\ z_1 \end{pmatrix} = \begin{pmatrix} x_1'' \\ y_1'' \\ z_1'' \end{pmatrix} + \begin{pmatrix} x_3 \\ y_3 \\ 0 \end{pmatrix} + \begin{pmatrix} d_l * \cos(\varphi_{13}) \\ d_l * \sin(\varphi_{13}) \\ 0 \end{pmatrix};$$

Die vorstehende Beschreibung der bevorzugten Ausführungsbeispiele der Erfindung wurde zum Zweck der Erläuterung gegeben. Die Erfindung ist nicht auf die offenbarten Ausführungsbeispiele beschränkt. Viele Möglichkeiten und Veränderungen der Ausführungsbeispiele sind für einen Fachmann in Bezug der vorstehende Offenbarung ersichtlich, und der Schutzumfang der Erfindung wird nur durch die beigefügten Ansprüche definiert.

**Patentansprüche**

1. Verfahren zur Bestimmung der räumlichen Lage einer Radfelge zu einem Meßgerät, das wenigstens eine Kamera aufweist, wobei die Radfelge im Blickfeld der Kamera liegt, umfassend:

Bereitstellen eines Modells, das einen Modellkörper eines lokalisierbares Radfelgen-Geometriedetail sowie die räumliche Lage des Modellkörpers zu dem Meßgerät durch Modellparameter beschreibt,
Erfassen eines Bildes des Radfelgen-Geometriedetails der Radfelge mit der Kamera,
Anpassen der aus den Modellparametern resultierenden Abbildung des Modellkörpers an das Bild des Radfelgen-Geometriedetails durch Verändern von Modellparametern des Modells, und
Verfolgen der Veränderungen der Modellparameter des Modells beim Anpassen, wobei
die Daten bezüglich der Lage des Modellkörpers des Radfelgen-Geometriedetails die räumliche Lage des Radfelgen-Geometriedetails und damit der Radfelge selbst wiedergeben, wenn die aus den Modellparametern resultierende Abbildung des Modellkörpers des Radfelgen-Geometriedetails mit dem erfassten Bild des Radfelgen-Geometriedetails innerhalb vorgegebener Toleranzgrenzen übereinstimmt.

2. Verfahren nach Anspruch 1, **dadurch gekennzeichnet, dass** der Modellkörper ein sogenannter Schmiegetorus oder eine 3D-CAD-Darstellung ist.

3. Verfahren nach Anspruch 2, **dadurch gekennzeichnet, dass** im Falle des Schmiegetorus Modellparameter des Modells ein Hauptradius R und ein Nebenradius r des Torus, eine Position c des Toruszentrums, ein Normalenvekor n der Rotationsebene des Torus und eine Position p des Projektionszentrums einer Lochkamera sind, mit der der Schmiegetorus betrachtet wird.

4. Verfahren nach einer der Ansprüche 1 bis 3, **dadurch gekennzeichnet, dass** das Radfelgen-Geometriedetail die Schattengrenze der Felgenrandkontur ist.

5. Verfahren nach Anspruch 4, **dadurch gekennzeichnet, dass**
die Schattengrenze von der wenigstens einen Kamera erfasst wird; dass
aus der Schattengrenze eine extremale Schattengrenzkurve berechnet wird,; dass
aus der extremale Schattengrenzkurve über eine orthogonale Projektion eine Achse berechnet wird, die senkrecht auf einer von der Radfelge aufgespannten Ebene steht, womit die Lage der Radfelge im Raum bestimmt ist.

6. Verfahren nach Anspruch 1, **dadurch gekennzeichnet, dass** die Radfelgenkontur mit zwei Kameras erfasst wird, die unter unterschiedlichen Winkeln auf das Rad gerichtet sind.

7. Verfahren nach Anspruch 1, **dadurch gekennzeichnet, dass** das Bild der Radfelge zur Bestimmung eines Drehwinkel-Bezugspunktes an der Felge verwendet wird.

8. Verfahren nach Anspruch 7, **dadurch gekennzeichnet, dass** zur Bestimmung des Drehwinkel-Bezugspunktes an der Felge die Lage eines charakteristischen Merkmals auf dem Rad verwendet wird.

9. Verfahren nach Anspruch 8, **dadurch gekennzeichnet, dass** als charakteristisches Merkmal zur Bestimmung des Drehwinkel-Bezugspunktes ein charakteristisches Merkmal der Felge verwendet wird.

10. Verfahren nach Anspruch 8, **dadurch gekennzeichnet, dass** als charakteristisches Merkmal zur Bestimmung des Drehwinkel-Bezugspunktes ein Ventil des Rades verwendet wird.

11. Verfahren nach einem der Ansprüche 7 bis 10, **dadurch gekennzeichnet, dass** zur Segmentierung des Felgenumfangs eine Vorsegmentierung und eine Feinsegmentierung durchgeführt wird.

12. Verfahren nach Anspruch 11, **dadurch gekennzeichnet, dass** zusätzlich zur Vorsegmentierung und Feinsegmentierung eine Subpixelsegmentierung durchgeführt wird.

13. Verfahren nach Anspruch 1, **dadurch gekennzeichnet, dass** das Anpassen der Abbildung des Modellkörpers des Radfelgen-Geometriedetails an das Bild des Radfelgen-Geometriedetails durch Verändern von Modellparametern des Modells **dadurch** erfolgt, dass zunächst eine Approximation einer Felgenrandebene, dann eine Winkelargumentberechnung und schließlich eine endgültige Torusmodellanpassung an die finale Felgenrandebene durchgeführt wird.

14. Verfahren nach Anspruch 1, **dadurch gekennzeichnet, dass** die Daten bezüglich der Modellparameter des Modells, die die räumliche Lage der Radfelge definieren, wenn die Abbildung des Modellkörpers des Radfelgen-Geometriedetails mit dem erfassten Bild des Radfelgen-Geometriedetails übereinstimmt, ausgegeben oder angezeigt werden.

15. Verfahren nach Anspruch 1, **gekennzeichnet durch** folgende Schritte:

Starten der Bildaufnahme;
Segmentierung der Felge, wobei eine Segmentierung des Ventils des Kraftfahrzeugrades erfolgt;
Segmentierung des Felgenrandes; um vorgegebene Winkelbereiche des Felgenrandes auszumessen;
Rekonstruktion der 3D-Lage des Felgenrandes;
Anzeigen des Ergebnisses der Berechnung, nämlich des Normalenvektors und des Zentrumspunkt der Felgenrandebene und/oder Speichern derselben für die weitere Verrechnung.

**16.** Verfahren nach Anspruch 15, **dadurch gekennzeichnet, dass** die Lage eines charakteristischen Merkmals unter Berücksichtigung der äußeren Kameraparameter rekonstruiert wird, um einen Parametersatz "Rotationsachse", das heisst, die wahre Rotationsachse in Bezug auf den normalen Vektor zu erhalten.

**17.** Verfahren nach Anspruch 15 oder 16, **dadurch gekennzeichnet, dass** nach dem Starten der Bildaufnahme zunächst überprüft wird, ob die Beleuchtung für die Messung ausreichend ist, und dass die Beleuchtung entsprechend nachgestellt wird.

**18.** Verfahren nach Anspruch 15 oder 16, **dadurch gekennzeichnet, dass** die Nachstellung eine größere oder geringere Helligkeit des Lichtes für die Beleuchtung umfasst

**19.** Meßgerät zur Bestimmung der räumlichen Lage einer Radfelge zu dem Meßgerät, das wenigstens eine Kamera aufweist, wobei die Radfelge im Blickfeld der Kamera liegt, **gekennzeichnet durch** einen Rechner, der programmiert ist, um das Verfahren nach einem der Ansprüche 1 bis 16 durchzuführen.

**20.** Meßgerät nach Anspruch 19 zur Durchführung des Verfahren nach Anspruch 6, **dadurch gekennzeichnet, dass** zwei Kameras vorgesehen sind, die das perspektivische Bild der Radfelgenkontur erfassen und unter unterschiedlichen Winkeln auf das Rad gerichtet sind.

**21.** Meßgerät nach Anspruch 19 **dadurch gekennzeichnet, dass** es je Kamera einen optischen Sensor, eine Objektiv, eine Blendenstelleinrichtung und eine Fokusstelleirichtung umfasst, und dass die Einbaulage des Sensors und des Objektivs, die Blendeneinstellung und Fokuseinstellung vorjustiert sind.

**22.** Meßgerät nach Anspruch 20 **dadurch gekennzeichnet, dass** bei Zoom-Objektiven zudem die eingestellte Brennweite vorjustiert ist.

**23.** Meßgerät nach Anspruch 21 zur Durchführung des Verfahren nach Anspruch 14, **dadurch gekennzeichnet, dass** eine Ausgabe- beziehungsweise Anzeigevorrichtung zum Ausgegeben beziehungsweise Anzeigen der Daten bezüglich der Modellparameter des Modells des Radfelgen-Geometriedetails, die die räumliche Lage der Radfelge definieren, wenn der Modellkörper des Radfelgen-Geometriedetails mit dem erfassten Bild des Radfelgen-Geometriedetails übereinstimmt, vorgesehen ist.

**24.** Verfahren zur Fahrwerkvermessung an Kraftfahrzeugen, **dadurch gekennzeichnet, dass**
das Verfahren nach einem der Ansprüche 1 bis 18 an den Rädern des Kraftfahrzeugs durchgeführt wird, dass
die relativen Positionen der Meßgeräte zur Durchführung der Messungen bestimmt werden, dass
die Meßergebnisse der Messungen an den Rädern des Kraftfahrzeugs unter Berücksichtigung der relativen Positionen der Meßgeräte in Radstellungswerte umgerechnet werden, und dass
die Radstellungswerte ausgegeben oder angezeigt werden.

**25.** Verfahren nach Anspruch 24, **dadurch gekennzeichnet, dass** die relativen Positionen der Meßgeräte zur Durchführung der Messungen durch eine justierbare Montage der Meßgeräte an einem Meßplatz festgelegt werden.

**26.** Verfahren nach Anspruch 25, **dadurch gekennzeichnet, dass** die relativen Positionen der Meßgeräte zur Durchführung der Messungen durch ein Bezugssystem bestimmt werden, das zwischen den Meßgeräten angeordnet ist.

**27.** Verfahren nach Anspruch 24, **gekennzeichnet durch** folgende Schritte:

Durchführung der Messungen der einzelnen Meßgeräte;
Einlesen der Meßergebnisse in einen Rechner;
Berechnen der Transformationsmatrix aus den Ergebnissen der Bezugssystemessung;
Transformieren der Ergebnisvektoren der Meßgeräte in das Rechenkoordinatensystems über Versatzwinkel und Abstände aus dem Bezugsmeßsystem;
Bestimmen der Radstellungswerte in dem Rechenkoordinatensystem **durch** Auswertung der Stellung der Ergebnisvektoren zueinander zur Berechnung der entsprechenden Fahrwerkmeßwerte;
Übergeben der Ergebnisse zu den Radstellungswerten an eine Anzeigeeinrichtung und/oder Speichern derselben zur weiteren Verwendung.

**28.** Fahrwerkvermessungseinrichtung für Kraftfahrzeuge, **gekennzeichnet durch** Meßgeräte nach einem der Ansprü-

**EP 1 725 834 B1**

che 19 bis 23, die auf einem Meßplatz derart positioniert sind, dass ein Meßgerät jeweils einem der Räder des Kraftfahrzeugs zugeordnet ist, wobei die relativen Positionen der Meßgeräte bei der Durchführung der Messungen bestimmt sind, einen Rechner, der die Meßergebnisse der Messungen an den Rädern des Kraftfahrzeugs unter Berücksichtigung der relativen Positionen der Meßgeräte in Radstellungswerte umrechnet, und **durch** eine Anzeige/Ausgabeeinrichtung, die die Radstellungswerte ausgibt oder anzeigt.

29. Fahrwerkvermessungseinrichtung nach-Anspruch 28, **dadurch gekennzeichnet, dass** die relativen Positionen der Meßgeräte zur Durchführung der Messungen durch eine justierbare Montage der Meßgeräte an einem Meßplatz festgelegt werden.

30. Fahrwerkvermessungseinrichtung nach Anspruch 28, **dadurch gekennzeichnet, dass** die relativen Positionen der Meßgeräte zur Durchführung der Messungen durch ein Bezugssystem bestimmt werden, das zwischen den Meßgeräten angeordnet ist.

31. Fahrwerkvermessungseinrichtung nach Anspruch 28, **dadurch gekennzeichnet, dass** beim Zusammenbau zweier Kameras in einem Meßgerät zu einem Stereo-Meßsystem die Kameras bezogen auf das Koordinatensystem des Meßgeräts kalibriert sind.

**Claims**

1. Method for determining the spatial position of a wheel rim to a measuring unit, that includes at least one camera, wherein the wheel rim lies in the field of view of the camera, including:

    providing a model that describes a model body of a localizable wheel rim geometry detail as well as the spatial position of the model body to the measuring unit through model parameters,
    capturing an image of the wheel rim geometry detail of the wheel rim with the camera,
    fitting of the image of the model body resulting from the model parameters to the image of the wheel rim geometry detail through changing the model parameters of the model, and
    tracking the changes of the model parameters of the model during the fitting,
    whereby the data related to the position of the model body of the wheel rim geometry detail reflect the spatial position of the wheel rim geometry detail and, thereby, of the wheel rim itself, when the image of the model body of the wheel rim geometry detail resulting from the model parameters corresponds to the captured image of the wheel rim geometry detail within predetermined tolerance limits.

2. Method according to claim 1, **characterized in that** the model body is a so- called osculating torus or a 3D-CAD representation.

3. Method according to claim 2, **characterized in that**, in case of the osculating torus, model parameters of the model are a main radius R and a secondary radius r of the torus, a position c of the torus center, a normal vector n of the plane of rotation of the torus and a position p of the projection center of a pinhole camera, with which the osculating torus is viewed.

4. Method according to one of the claims 1 to 3, **characterized in that** the wheel rim geometry detail is the shadow boundary of the rim edge contour.

5. Method according to claim 4, **characterized in that**
    the shadow boundary is captured by the at least one camera; that
    from the shadow boundary an extremal shadow boundary curve is calculated; that
    from the extremal shadow boundary curve an axis is calculated through an orthogonal projection, which axis is perpendicular to a plane spanned by the wheel rim, whereby the position of the wheel rim in space is determined.

6. Method according to claim 1, **characterized in that** the wheel rim contour is captured with two cameras, which are directed to the wheel at different angles.

7. Method according to claim 1, **characterized in that** the image of the wheel rim is used for determining a rotation angle-reference point at the rim.

8. Method according to claim 7, **characterized in that** for determination of the rotation angle-reference point on the rim, the position of a characteristic feature on the wheel is used.

9. Method according to claim 8, **characterized in that**, as a characteristic feature for determination of the rotation angle-reference point, a characteristic feature on the rim is used.

10. Method according to claim 8, **characterized in that**, as a characteristic feature for determination of the rotation angle-reference point, a valve of the wheel is used.

11. Method according to any of claims 7 to 10, **characterized in that**, for segmentation of the perimeter of the rim, a pre-segmentation and a fine segmentation are carried out.

12. Method according to claim 11, **characterized in that**, in addition to the pre-segmentation and fine segmentation, a sub-pixel segmentation is carried out.

13. Method according to claim 1, **characterized in that** the fitting of the image of the model body of the wheel rim geometry detail to the image of the wheel rim geometry detail through changing of model parameters of the model is done thereby that, at first, an approximation of a rim edge plane, then an angle argument calculation and lastly a final torus model fitting to the final rim edge plane are carried out.

14. Method according to claim 1, **characterized in that** the data with respect to the model parameters of the model, which define the spatial position of the wheel rim, when the image of the model body of the wheel rim geometry detail corresponds to the captured image of the wheel rim geometry detail, are output or displayed.

15. Method according to claim 1, **characterized by** the following steps:

   starting the image capturing;
   segmentation of the rim, wherein a segmentation of the valve of the motor vehicle is carried out;
   segmentation of the rim edge in order to measure predetermined angle ranges of the rim edge;
   reconstruction of the 3-D position of the rim edge;
   displaying the results of the calculation, namely of the normal vector and of the central point of the rim edge plane and/or storing of the same for the further calculation.

16. Method according to claim 15, **characterized in that** the position of a characteristic feature is reconstructed taking into account the outer camera parameters, in order to obtain a parameter set "axis of rotation", that is the true axis of rotation with respect to the normal vector.

17. Method according to claim 15 or 16, **characterized in that**, after starting the image capturing, it is examined at first whether the illumination is sufficient for the measurement, and that the illumination is adjusted accordingly.

18. Method according to claim 15 or 16, **characterized in that** the adjustment includes a higher or lower brightness of the light for the illumination.

19. Measuring unit for determining the spatial position of a wheel rim to a measuring unit that includes at least one camera, wherein the wheel rim lies in the field of view of the camera, **characterized by** a computer which is programmed to carry out the method according to any of claims 1 to 16.

20. Measuring unit according to claim 19 for carrying out the method according to claim 6, **characterized in that** two cameras are provided which capture the perspective image of the wheel rim contour and which are directed to the wheel at different angles.

21. Measuring unit according to claim 19, **characterized in that** each camera includes an optical sensor, an objective, an aperture setting unit and a focus setting unit, and that the mounting position of the sensors and of the objective, the aperture setting and focus setting are pre-adjusted.

22. Measuring unit according to claim 20 **characterized in that**, in case of Zoom-objectives, furthermore the set focal distance is pre-adjusted.

**23.** Measuring unit according to claim 21 for carrying out the method according to claim 14, **characterized in that** an output- or display device, respectively, is provided for outputting or displaying, respectively, the data with respect to the model parameters of the model of the wheel rim geometry detail, which data define the spatial position of the wheel rim, when the model body of the wheel rim geometry detail corresponds to the captured image of the wheel rim geometry detail.

**24.** Method for the wheel alignment measurement on motor vehicles, **characterized in that**
the method according to any of claims 1 to 18 is carried out on the wheels of the motor vehicle, that
that the relative positions of the measuring units for carrying out the measurements are determined,
that the measuring results of the measurements on the wheels of the motor vehicle are converted into wheel position values taking into account the relative positions of the measuring units, and
that the wheel position values are output or displayed.

**25.** Method according to claim 24, **characterized in that** the relative positions of the measuring units for carrying out the measurements are determined through an adjustable mounting of the measuring units at a measuring site.

**26.** Method according to claim 25, **characterized in that** the relative positions of the measuring units for carrying out the measurements are determined through a reference system that is arranged between the measuring units.

**27.** Method according to claim 24, **characterized by** the following steps:

carrying out the measurements of the individual measuring units;
reading the measuring results into a computer;
calculating the transformation matrix from the results of the reference system measurement;
transforming the result vectors of the measuring units into the calculating coordinates system through offset angles and distances from the reference measuring system;
determining the wheel position values in the calculating coordinates system through evaluation of the position of the result vectors to each other for calculation of the corresponding wheel alignment measurement values;
transmitting the results of the wheel position values to a display system and/or storing of the same for further use.

**28.** Wheel alignment measuring system for motor vehicles, **characterized by** measuring units according to any of claims 19 to 23, which measuring units are positioned at a measuring site in such a manner that a measuring unit each is associated with one of the wheels of the motor vehicle whereby the relative positions of the measuring units are determined during carrying out the measurements, a computer which converts the measurement results of the measurements on the wheels of the motor vehicle to wheel position values taking into account the relative positions of the measuring units, and by an output- or display device which outputs or displays the wheel position values.

**29.** Wheel alignment measuring system according to claim 28, **characterized in that** the relative positions of the measuring units for carrying out the measurements are determined through an adjustable mounting of the measuring units at a measuring site.

**30.** Wheel alignment measuring system according to claim 28, **characterized in that** the relative positions of the measuring units for carrying out the measurements are determined through a reference system, that is arranged between the measuring units.

**31.** Wheel alignment measuring system according to claim 28, **characterized in that**, upon combined assembly of two cameras in a measuring unit for a stereo-measuring system, the cameras are calibrated with respect to the coordinates system of the measuring unit.

**Revendications**

**1.** Procédé pour déterminer la position dans l'espace d'une jante de roue par rapport à un appareil de mesure qui présente au moins une caméra, la jante de roue se situant dans le champ de vision de la caméra, le procédé comprenant

- la mise à disposition d'un modèle qui décrit, à l'aide de paramètres de modèle, un corps modèle d'un détail géométrique localisable de jante de roue, ainsi que la position dans l'espace du corps modèle par rapport à l'appareil de mesure,

- l'enregistrement d'une image du détail géométrique de jante à l'aide de la caméra,
- l'adaptation de la représentation du corps modèle, résultant des paramètres de modèle, à l'image du détail géométrique de jante, par modification de paramètres du modèle, et
- le suivi des modifications des paramètres du modèle lors de l'adaptation, selon lequel

les données concernant la position du corps modèle du détail géométrique de jante reproduisent la position dans l'espace dudit détail et donc de la jante elle-même, lorsque la reproduction du corps modèle du détail géométrique de jante, qui résulte des paramètres de modèle, coïncide avec l'image enregistrée du détail géométrique de jante, à l'intérieur de limites de tolérance prédéterminées.

2. Procédé selon la revendication 1, **caractérisé en ce que** le corps modèle est un élément appelé "tore osculateur" ou une représentation DAO en 3D.

3. Procédé selon la revendication 2, **caractérisé en ce que**, dans le cas du tore osculateur, les paramètres du modèle sont constitués d'un rayon majeur R et d'un rayon mineur r du tore, d'une position c du centre du tore, d'un vecteur de normale n du plan de rotation du tore et d'une position p du centre de projection d'une chambre noire à sténopé, avec laquelle on regarde le tore osculateur.

4. Procédé selon une des revendications 1 à 3, **caractérisé en ce que** le détail géométrique de jante est la limite d'ombre du contour du bord de jante.

5. Procédé selon la revendication 4, **caractérisé en ce que**
la limite d'ombre est enregistrée par la caméra, au nombre d'au moins une; **en ce que**
l'on calcule une courbe de limite d'ombre extrémale à partir de la limite d'ombre; **en ce que**
l'on calcule à partir de la courbe de limite d'ombre extrémale, via une projection orthogonale, un axe qui est perpendiculaire à un plan défini par la jante de roue, ce qui permet de déterminer la position de la jante dans l'espace.

6. Procédé selon la revendication 1, **caractérisé en ce que** le contour de jante est enregistré à l'aide de deux caméras qui sont dirigées sous des angles différents sur la roue.

7. Procédé selon la revendication 1, **caractérisé en ce que** l'image de la jante de roue est utilisée pour déterminer un point de référence d'angle de rotation sur la jante.

8. Procédé selon la revendication 7, **caractérisé en ce que**, pour déterminer le point de référence d'angle de rotation sur la jante, on utilise la position d'une propriété caractéristique sur la roue.

9. Procédé selon la revendication 8, **caractérisé en ce que** l'on utilise une propriété caractéristique de la jante comme propriété caractéristique pour déterminer le point de référence d'angle de rotation.

10. Procédé selon la revendication 8, **caractérisé en ce que** l'on utilise une valve de la roue comme propriété caractéristique pour déterminer le point de référence d'angle de rotation.

11. Procédé selon une des revendications 7 à 10, **caractérisé en ce que**, pour segmenter la périphérie de la jante, on procède à une segmentation préalable et à une segmentation fine.

12. Procédé selon la revendication 11, **caractérisé en ce que** l'on effectue une segmentation au sous-pixel, en plus de la segmentation préalable et de la segmentation fine.

13. Procédé selon la revendication 1, **caractérisé en ce que** l'adaptation de la reproduction du corps modèle du détail géométrique de jante de roue à l'image du détail géométrique de jante de roue est opérée par modification de paramètres du modèle, en réalisant d'abord une approximation d'un plan de bord de jante, puis un calcul d'argument angulaire et enfin une adaptation définitive de modèle de tore au plan de bord de jante final.

14. Procédé selon la revendication 1, **caractérisé en ce que** les données concernant les paramètres du modèle, qui définissent la position de la jante de roue dans l'espace lorsque la reproduction du corps modèle du détail géométrique de jante coïncide avec l'image enregistrée du détail géométrique de jante, sont éditées ou visualisées.

**15.** Procédé selon la revendication 1, **caractérisé en ce qu'**il comprend les étapes suivantes :

segmentation de la jante, en effectuant une segmentation de la valve de la roue de véhicule automobile;
segmentation du bord de jante aux fins de mesurer des zones angulaires prédéterminées du bord de jante;
reconstruction de la position 3D du bord de jante;
visualisation du résultat du calcul, à savoir du vecteur de normale et du point au centre du plan de bord de jante, et/ou mémorisation de ces éléments en vue du calcul ultérieur.

**16.** Procédé selon la revendication 15, **caractérisé en ce que** la position d'une propriété caractéristique est reconstruite en tenant compte des paramètres de caméra extérieurs, afin d'obtenir une loi paramétrique "axe de rotation", c'est-à-dire l'axe de rotation vrai par rapport au vecteur normal.

**17.** Procédé selon la revendication 15 ou 16, **caractérisé en ce que**, après le lancement de l'enregistrement d'image, on vérifie d'abord si l'éclairage est suffisant pour la mesure, et **en ce que** l'éclairage est ajusté en conséquence.

**18.** Procédé selon la revendication 15 ou 16, **caractérisé en ce que** l'ajustage englobe une clarté plus grande ou plus faible de la lumière pour l'éclairage.

**19.** Appareil de mesure pour déterminer la position d'une jante de roue dans l'espace par rapport à l'appareil de mesure qui comprend au moins une caméra, la jante de roue se situant dans le champ de vision de la caméra, **caractérisé en ce qu'**il comporte un ordinateur qui est programmé pour exécuter le procédé selon une des revendications 1 à 16.

**20.** Appareil de mesure selon la revendication 19 pour la mise en oeuvre du procédé selon la revendication 6, **caractérisé en ce qu'**il est prévu deux caméras qui enregistrent l'image en perspective du contour de jante de roue et sont dirigées sous des angles différents sur la roue.

**21.** Appareil de mesure selon la revendication 19, **caractérisé en ce qu'**il comprend pour chaque caméra un capteur optique, un objectif, un dispositif d'ajustage de diaphragme et un dispositif de réglage de foyer, et **en ce que** la position de montage du capteur et de l'objectif, le réglage du diaphragme et le réglage du foyer font l'objet d'un ajustage préalable.

**22.** Appareil de mesure selon la revendication 20, **caractérisé en ce que** sur des objectifs à zoom, la distance focale est en outre préréglée.

**23.** Appareil de mesure selon la revendication 21 pour la mise en oeuvre du procédé selon la revendication 14, **caractérisé en ce qu'**il est prévu un dispositif d'édition ou de visualisation pour éditer ou visualiser les données concernant les paramètres du modèle du détail géométrique de jante de roue, qui définissent la position de la jante de roue dans l'espace lorsque le corps modèle du détail géométrique de jante coïncide avec l'image enregistrée du détail géométrique de jante.

**24.** Procédé de mesure de train de roulement sur des véhicules automobiles, **caractérisé en ce que**
le procédé selon une des revendications 1 à 18 est mis en oeuvre sur les roues du véhicule automobile, **en ce que**
les positions relatives des appareils de mesure pour exécuter les mesures sont déterminées, **en ce que**
les résultats des mesures effectuées sur les roues du véhicule sont convertis en valeurs de position de roue, en tenant compte des positions relatives des appareils de mesure, et **en ce que**
les valeurs de position de roue sont éditées ou visualisées.

**25.** Procédé selon la revendication 24, **caractérisé en ce que** les positions relatives des appareils de mesure pour effectuer les mesures sont définies par un montage ajustable des appareils de mesure sur un poste de mesure.

**26.** Procédé selon la revendication 25, **caractérisé en ce que** les positions relatives des appareils de mesure pour effectuer les mesures sont définies par un système de référence qui est disposé entre les appareils de mesure.

**27.** Procédé selon la revendication 24, **caractérisé en ce qu'**il comprend les étapes suivantes :

réalisation des mesures des différents appareils de mesure;
introduction des résultats de mesure dans un ordinateur;
calcul de la matrice de transformation à partir des résultats de la mesure de système de référence;

transformation des vecteurs résultats des appareils de mesure dans le système de coordonnées de calcul, via des angles de décalage et des distances provenant du système de mesure de référence;

détermination des valeurs de position de roue dans le système de coordonnées de calcul, en exploitant la position réciproque des vecteurs résultats, afin de calculer les valeurs de mesure correspondantes du train de roulement;

transfert des résultats concernant les valeurs de position de roue à un dispositif de visualisation et/ou mémorisation desdits résultats en vue de leur utilisation ultérieure.

28. Dispositif de mesure de train de roulement pour véhicules automobiles, **caractérisé en ce qu'**il comprend des appareils de mesure selon une des revendications 19 à 23, qui sont placés sur un poste de mesure de manière telle qu'un appareil de mesure est chaque fois associé à l'une des roues du véhicule, les positions relatives des appareils de mesure étant déterminées lors de la réalisation des mesures, ainsi qu'un ordinateur qui convertit les résultats des mesures effectuées sur les roues du véhicule en valeurs de position de roue, en tentant compte des positions relatives des appareils de mesure, et un dispositif de visualisation/édition qui édite ou visualise les valeurs de position de roue.

29. Dispositif de mesure de train de roulement selon la revendication 28, **caractérisé en ce que** les positions relatives des appareils de mesure pour réaliser les mesures sont définies par un montage ajustable des appareils de mesure sur un poste de mesure.

30. Dispositif de mesure de train de roulement selon la revendication 28, **caractérisé en ce que** les positions relatives des appareils de mesure pour réaliser les mesures sont définies par un système de référence qui est disposé entre les appareils de mesure.

31. Dispositif de mesure de train de roulement selon la revendication 28, **caractérisé en ce que**, lors du montage de deux caméras dans un appareil de mesure pour obtenir un système stéréométrique, les caméras sont étalonnées par rapport au système de coordonnées de l'appareil de mesure.

Fig: 1

Fig: 2

Fig: 3

Fig: 4

Fig: 5

Fig: 6

*Felgenrandebene*

Radachse

Torus

Fig: 7

Torus über den
Felgenhornradius

d

2

Fig: 8

Fig: 9

Fig: 10

Messung starten — 60

Messung MK's (1..n) — 62

Ergebnisse MK's
einlesen — 64

vorhanden — 66

Bestimmung der Transformationsmatrix
aus BM-Ergebnissen — 68

Transformation der Ergebnisvektoren
der Meßgeräte in das Rechenko
ordinatensystems über Versatzwinkel
und Abstände aus dem
Bezugsmeßsystem — 70

Bestimmung der Radstellungswerte im
Raum — 74

Ergebnisübergabe (Sturz, Spur und
von Spur abgeleitete Werte) — 76

# Fig: 11

Startsignal für Messung _80_

Beleuchtungssteuerung _84_ ← Bildaufnahme _82_ ↔ Kamera rechts/links _86_

Ventil-segmentierung _90_ ↔ Segmentierung _88_ → Vorsegmentierung _92_

Feinsegmentierung _94_

Subpixelsegmentierung _96_

Bestimmung der realen Felgenrandkontur (unter Modellannahmen) _98_

Eleminierung optischer Verzerrungen _102_ ← innere Kameraparameter _100_ → Eleminierung optischer Verzerrungen _104_

3D Rekonstruktion des Ventils _108_ ← äußere Kameraparameter _106_ → Felgenrand-rekonstruktion _110_

1. Approximation der Felgenrandebene _114_

Winkelargument-berechnung _116_

Torusmodellpassung finale Felgenrandebene _118_

3D-Position des Ventils _112_

Normalenvektor u. Zentrumspunkt der Felgenrandebene _120_

Fig: 12

29

*112*

3D-Position des
Ventils

*122*

Felgenschlagkompensation

*120*

Normalenvektor u.
Zentrumspunkt
der Felgenrandebene

Parametersatz "Rotationsachse":
wahre Rotationsachse in Bezug auf
Normalenvektor und Ventilstellung
(Kugelkoordinaten)

*124*

Fig: 13

*112*

3D-Position des
Ventils

*126*

Lagebestimmung
Rotationsachse

*124*

Parametersatz
"Rotationsachse"

Normalenvektor u.
Zentrumspunkt
der Felgenrandebene

*120*

Transformation in
Referenzkoordinatensystem

*128*

Spur und Sturzwinkel

*130*

Fig: 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10043354
- DE 19757760
- DE 19757763
- DE 10032356
- DE 10050653
- DE 2948573
- EP 0895056 A
- US 6323776 B